# EUROPEAN PATENT APPLICATION

(11) **EP 4 835 543 A1**
(43) Date of publication of application: **04.11.2026**
(21) Application number: 24911996.7
(22) Date of filing: 29.10.2024
(51) Int. Cl.: G02B 27/02, G02B 5/00, G02B 5/18, G02B 5/32

(54) **RESIN LIGHT GUIDE FOR DISPLAY, IMAGE DISPLAY DEVICE, AND METHOD FOR MANUFACTURING RESIN LIGHT GUIDE FOR DISPLAY**

(30) Priority: 27.12.2023 JP 2023221013
(71) Applicant: ASAHI KASEI KABUSHIKI KAISHA, Tokyo 100-0006 (JP)
(72) Inventor: YAMAHATA Yuta, Tokyo 100-0006 (JP); TADA Yutaka, Tokyo 100-0006 (JP); MIKAWA Noriko, Tokyo 100-0006 (JP)
(74) Representative: D Young & Co LLP
(86) International application number: PCT/JP2024/038583
(87) International publication number: WO 2025/142103

(57) **Abstract**

With an object of providing a resin light guide for a display, such as a head-mounted display, having good external appearance and image quality, a solution is a resin light guide for a display that contains a methacrylic resin composition, in which an absolute value of a degree of orientation of methacrylic acid ester monomer units in the methacrylic resin composition is 0.10 to 0.25, and in which a PV value of an effective area surface that guides image light is 100 µm or less.

## Description

### TECHNICAL FIELD

The present disclosure relates to a resin light guide for a display, an image display device, and a method of producing a resin light guide for a display.

### BACKGROUND

In recent years, AR (augmented reality) displays where light emitted from an image display element is guided to an eyeball of an observer through a waveguide and an image is shown to the observer via a diffractive optical element have been commercialized. Since AR (augmented reality) displays are image display devices that are worn on the head while being used, it is desirable for AR displays to be compact, thin, light weight, and cause little discomfort while being worn. For this reason, attempts are being made to replace conventional light guides made of glass using resins with the aim of weight reduction, and light guides produced by injection molding have been disclosed in Patent Literature (PTL) 1 and PTL 2, listed below.

### CITATION LIST

### Patent Literature

PTL 1: JP 2021-162621 A
PTL 2: JP 2023-059010 A

### SUMMARY

### (Technical Problem)

Resin light guides that are typically produced by injection molding tend to have high birefringence compared to light guides made of glass. Since holographic elements, liquid-crystal diffractive elements, and surface relieftype diffractive optical elements that are used with light guides are known to, in some instances, have polarization dependence in terms that diffraction efficiency thereof changes according to the polarization state of incident light, the use of a light guide having high birefringence in an image display device leads to problems such as the occurrence of non-uniformity of brightness or rainbow-like non-uniformity of color in an image observed by an observer and deterioration of image quality.

On the other hand, there is a trend toward reducing the thickness of light guides with the aim of weight reduction, but studies conducted by the inventors have revealed that when a thin-plate light guide is produced by injection molding, it is difficult to obtain a light guide that has good external appearance and optical performance (low birefringence, flatness, surface accuracy, etc.). For example, reduction of the thickness of a light guide makes cracking more likely to occur during demolding of the light guide and negatively affects external appearance of the light guide. Moreover, a thin light guide thickness also tends to result in the occurrence of warping and non-uniformity of thickness, and also deterioration of surface flatness. Furthermore, when an image is observed using a light guide that has poor surface flatness, deterioration of image quality is an issue.

The present disclosure was made in light of the problems described above, and one object thereof is to provide a resin light guide for a display, such as a head-mounted display, having good external appearance and image quality.

Another object of the present disclosure is to provide an image display device including this resin light guide for a display.

Yet another object of the present disclosure is to provide a method of producing a resin light guide for a display by which it is possible to produce a resin light guide for a display, such as a head-mounted display, having good external appearance and image quality.

### (Solution to Problem)

As a result of extensive and diligent studies, the inventors completed the present disclosure according to the following [1] to [14].

Specifically, the present disclosure is as set forth below.
[1] A resin light guide for a display comprising a methacrylic resin composition, wherein
   an absolute value of a degree of orientation of methacrylic acid ester monomer units in the methacrylic resin composition contained in the resin light guide for a display is 0.10 to 0.25, and
   a PV value of an effective area surface that guides image light is 100 µm or less.
[2] The resin light guide for a display according to [1], wherein an absolute value of a photoelastic coefficient of the methacrylic resin composition contained in the resin light guide for a display is 10 × 10⁻¹² Pa⁻¹ or less.
[3] The resin light guide for a display according to [1] or [2], wherein the methacrylic resin composition has a weight-average molecular weight of 110,000 to 170,000.
[4] The resin light guide for a display according to any one of [1] to [3], having a glass-transition temperature (Tg) of 115°C to 150°C.
[5] The resin light guide for a display according to any one of [1] to [4], wherein an absolute value of in-plane retardation is 10 nm or less.
[6] The resin light guide for a display according to any one of [1] to [5], wherein the methacrylic resin composition contains a methacrylic resin including a structural unit having a cyclic structure.
[7] The resin light guide for a display according to any one of [1] to [6], wherein the structural unit having a cyclic structure includes at least one structural unit selected from the group consisting of a structural unit derived from an N-substituted maleimide monomer, a glutarimide-based structural unit, an aromatic vinyl structural unit, an alicyclic vinyl structural unit, and a lactone ring structural unit.
[8] The resin light guide for a display according to any one of [1] to [7], wherein the structural unit having a cyclic structure includes a structural unit derived from an N-substituted maleimide monomer.
[9] The resin light guide for a display according to any one of [1] to [8], having a thickness of 0.8 mm or less.
[10] The resin light guide for a display according to any one of [1] to [9], comprising a diffractive optical element at either or both of an entry section and an exit section of light.
[11] The resin light guide for a display according to any one of [1] to [10], wherein
   the resin light guide for a display has a micro-protuberance in a section of a surface or at a plurality of sites, and
   the micro-protuberance has a line width of 0.10 µm to 2.00 µm.
[12] The resin light guide for a display according to [11], wherein a ratio (height)/(line width) of the line width and height of the micro-protuberance is 0.10 to 1.50.
[13] An image display device comprising the resin light guide for a display according to any one of [1] to [12].
[14] A method of producing a resin light guide for a display through injection compression molding of a thermoplastic resin composition, the method comprising a resin filling step and a compression step, wherein
   a temperature from a nozzle tip to a middle of an injection molding machine cylinder is set as a temperature that is 120°C to 180°C higher than a glass-transition temperature (Tg) of the thermoplastic resin composition and a mold temperature is set within a range of (Tg - 80)°C to (Tg - 35)°C relative to the glass-transition temperature (Tg) of the thermoplastic resin composition, and
   each condition among an injection rate and a filling time in the resin filling step, a compression distance, a compression time, and a compression pressure in the compression step, a compression delay time set between the resin filling step and the compression step, and a cooling time is adjusted such as to satisfy (1) and (2), indicated below:
      (1) an absolute value of in-plane retardation of the resin light guide for a display is 10 nm or less;
      (2) a PV value of an effective area surface that guides image light in the resin light guide for a display is 100 µm or less.

### (Advantageous Effect)

According to the present disclosure, it is possible to provide a resin light guide for a display having good external appearance and image quality.

According to the present disclosure, it is possible to provide an image display device including this resin light guide for a display.

According to the present disclosure, it is possible to provide a method of producing a resin light guide for a display by which it is possible to produce a resin light guide for a display having good external appearance and image quality.

### BRIEF DESCRIPTION OF THE DRAWINGS

In the accompanying drawings:
FIG. 1 is a schematic diagram illustrating evaluation of displayed image clarity of a resin light guide for a display in examples;
FIG. 2 is a schematic diagram illustrating measurement of a PV value of a light guide;
FIG. 3 is a diagram illustrating a micro-protuberance section measured by an atomic force microscope; and
FIG. 4 is a schematic diagram illustrating evaluation of polarization maintenance of a resin light guide for a display in examples.

### DETAILED DESCRIPTION

The following provides a detailed description of an embodiment of the present disclosure (hereinafter, referred to as the "present embodiment"). However, the present disclosure is not limited by the following description and can be implemented with various alterations within the essential scope thereof.

### (Resin light guide for display)

A resin light guide for a display (hereinafter, also referred to simply as a "resin light guide" or a "light guide") of the present embodiment contains a methacrylic resin composition, wherein
a degree of orientation of methacrylic acid ester monomer units in the methacrylic resin composition is 0.10 to 0.25, and
a PV value of an effective area surface that guides image light is 100 µm or less.

The "display" referred to in the resin light guide for a display according to the present disclosure may be a display device such as a head-mounted display, a wearable display, or an in-vehicle display.

The degree of orientation of methacrylic acid ester monomer units in the methacrylic resin composition that is contained in the light guide of the present embodiment is 0.10 to 0.25, and is preferably 0.11 to 0.20, more preferably 0.12 to 0.15, and even more preferably 0.12 to 0.13. When the degree of orientation of methacrylic acid ester monomer units is within any of the ranges set forth above, birefringence of the light guide can be suppressed due to suppression of orientation birefringence, and reduction of image quality can be prevented. Moreover, since a degree of orientation that is within any of the ranges set forth above results in suitable strength, it is possible to obtain a light guide having good external appearance without the occurrence of cracking when the light guide is demolded during molding thereof.

Examples of methods by which the degree of orientation described above can be controlled include controlling values of the weight-average molecular weight of a resin that is contained in the light guide and the mold temperature, injection rate, and so forth during injection molding as described further below. Note that the degree of orientation can be measured by a method described further below in the EXAMPLES section.

In the light guide of the present embodiment, a PV value of an effective area surface that guides image light is 100 µm or less, and is preferably 95 µm or less, more preferably 50 µm or less, and even more preferably 40 µm or less. A smaller PV value is preferable since a smaller PV value means that the light guide has higher flatness and tends to result in a light guide having good external appearance with suppressed warping and non-uniformity of thickness and also having excellent image quality. Although a smaller PV value is preferable as described above, the PV value may be 3 µm or more from a viewpoint of efficiently producing the light guide. Note that the "effective area surface" refers to each surface that is used to guide image light and that the "PV value of the effective area surface" is the PV value of each surface that is used to guide image light.

Examples of methods by which the PV value described above can be controlled include controlling the mold temperature and molding conditions during molding of a resin as described further below. For example, an excessively high mold temperature tends to cause warping and negatively affect the PV value. Note that the PV value can be measured by a method described further below in the EXAMPLES section. In a case in which a site having diffractive functionality is present at the surface of the light guide, the PV value can be determined by measuring the surface exclusive of that site. Moreover, in a case in which a site having diffractive functionality is not present at the surface of the light guide, the PV value can be determined by measuring the surface where a site having diffractive functionality is not present.

The resin light guide of the present embodiment can have micro-protuberance(s) having diffractive functionality in a section of a surface or at a plurality of sites. The micro-protuberance(s) can be molded as a single body with the resin light guide. Note that in both a case in which the light guide has micro-protuberance(s) in a section of a surface and a case in which the light guide has micro-protuberance(s) at a plurality of sites, the light guide can have a plurality of the micro-protuberances.

Moreover, as an alternative to the micro-protuberance(s) being molded as a single body with the resin light guide, a diffractive optical element may be affixed via a bonding agent or a pressure-sensitive adhesive in a step after molding of the resin light guide and then be used. In a case in which a diffractive optical element is affixed and used, it is preferable for the diffractive optical element to be included at either or both of an entry section and an exit section of light.

The plan view shape of a pattern of the micro-protuberance(s) is not specifically limited and may be a polygonal pyramid such as a triangular pyramid, a square pyramid, or a pentagonal pyramid, a curved surface cone such as a circular cone, an elliptical cone, a semicircular cone, a semielliptical cone, or an oblong cone (cone having a cross-section with a shape where both ends of a pair of parallel straight lines are connected by a semicircle), a truncated polygonal pyramid such as a truncated triangular pyramid, a truncated square pyramid, or a truncated pentagonal pyramid, a truncated curved surface cone such as a truncated circular cone, a truncated elliptical cone, a truncated semicircular cone, a truncated semielliptical cone, or a truncated oblong cone (truncated cone having a cross-section with a shape where both ends of a pair of parallel straight lines are connected by a semicircle), a polygonal prism such as a triangular prism, a square prism (cube, rectangular prism, etc.), or a pentagonal prism, a curved surface cylinder such as a circular cylinder, an elliptical cylinder, a semicircular cylinder, a semielliptical cylinder, or an oblong cylinder (cylinder having a cross-section with a shape where both ends of a pair of parallel straight lines are connected by a semicircle), a dome shape, or the like. In the case of a polygonal pyramid, a polygonal prism, or the like, the corners may be rounded. Furthermore, the shape of a side surface of the micro-protuberance(s) may be flat or curved.

Although just one of these micro-protuberance section shapes or a combination of a plurality thereof may be adopted, it is preferable that just one of these shapes is adopted.

The arrangement pattern of the shape described above is not specifically limited and may be a straight line, curved line, or dotted arrangement.

The line width of the micro-protuberance(s) is preferably within a range of 0.10 µm to 2.00 µm, more preferably within a range of 0.30 µm to 1.80 µm, and even more preferably within a range of 0.40 µm to 1.50 µm. When the line width of the micro-protuberance(s) is within any of the ranges set forth above, this tends to result in good formation of a micro-protuberance section by injection molding. A ratio of the height and the line width (height/line width) of the micro-protuberance(s) is preferably within a range of 0.10 to 1.50, more preferably within a range of 0.20 to 1.30, and even more preferably within a range of 0.25 to 1.20. When the ratio of the line width and the height of the micro-protuberance(s) is within any of the ranges set forth above, this tends to result in a molded product that has good external appearance without defects in the micro-protuberance(s). Note that the height of the micro-protuberance(s) referred to in the present specification means a highest value of thickness direction height of a molded product measured with a flat surface section of the light guide as a reference and that the height is taken to be an average value of the heights of at least five micro-protuberances. In a case in which the light guide does not have a flat surface section, the height of the micro-protuberance(s) may be taken to be a highest value of thickness direction height of the micro-protuberance(s) relative to average thickness of the molded product.

Note that the line width of the micro-protuberance(s) referred to in the present specification means the distance between centers of two adjacent micro-protuberances in plan view thereof, and the line width is taken to be an average value of the pitch measured for at least five micro-protuberances.

The line width and the height of micro-protuberance(s) can, more specifically, be measured by a method described further below in the EXAMPLES section.

The plan view shape of the resin light guide of the present embodiment may be a flat shape or may be a curved plate shape, as necessary, without any specific limitations. Moreover, the resin light guide may be molded with a shape that enables attachment to an image display device. For example, in a case in which the shape of the light guide is larger than a shape that is to be attached to an image display device, the light guide is shaped by cutting or the like to a shape that can be mounted.

From a viewpoint of reducing the weight of an image display device, the thickness of the light guide is preferably 0.8 mm or less, more preferably 0.7 mm or less, and even more preferably 0.6 mm or less. The thickness can be measured using an instrument such as a micrometer. Moreover, the thickness of the light guide may be 0.1 mm or more in consideration of easy of processing in production steps. Cracks tend to easily form when the thickness of the light guide is less than 0.1 mm. Note that the thickness of the light guide refers to the thickness in a direction perpendicular to the surface of the light guide.

The non-uniformity of thickness of the light guide is preferably 0.05 mm or less, more preferably 0.04 mm or less, and even more preferably 0.03 mm or less. The non-uniformity of thickness can be measured using an instrument such as a micrometer. Note that the non-uniformity of thickness of the light guide refers to variation of the thickness in a direction perpendicular to the surface of the light guide. Also note that non-uniformity of thickness of the light guide can, more specifically, be measured by a method described further below in the EXAMPLES section. In a case in which a site having diffractive functionality is present at the surface of the light guide, the non-uniformity of thickness can be measured by measuring an area of the surface from which that site is excluded.

An absolute value of in-plane retardation of the light guide is preferably 10 nm or less, more preferably 5 nm or less, and even more preferably 3 nm or less. When the absolute value of in-plane retardation is 10 nm or less, the polarization of light that has passed through the light guide tends to be kept constant between before and after entering the light guide, and optical properties are unlikely to be adversely affected. Note that the in-plane retardation can be measured by a method described further below in the EXAMPLES section.

Polarization maintenance Tp/(Tc + Tp) of the light guide is preferably 95% or more, more preferably 98% or more, and even more preferably 99% or more. When the polarization maintenance is within any of the ranges set forth above, this indicates that the polarization of light that has passed through the light guide is kept constant between before and after entering the light guide, and optical properties are unlikely to be adversely affected. From a viewpoint of restricting in-plane retardation, a material forming the light guide is preferably a methacrylic resin. Note that polarization maintenance can be measured by a method described further below in the EXAMPLES section.

Also note that Tp indicates the amount of light measured when two polarization plates are in a parallel arrangement, whereas Tc indicates the amount of light measured when two polarization plates are in a crossed arrangement.

### (Thermoplastic resin)

The light guide of the present embodiment contains a thermoplastic resin. Commonly known thermoplastic transparent resins such as cyclic polyolefin resins, polycarbonate resins, polyester resins, and methacrylic resins can be used as the thermoplastic resin without any specific limitations. From a viewpoint of transparency and low birefringence, a methacrylic resin is preferably used as the thermoplastic resin.

### ((Methacrylic resin composition))

The methacrylic resin composition that is contained in the light guide of the present embodiment contains a methacrylic resin. Besides the methacrylic resin, the methacrylic resin composition may optionally contain additives and may also contain a thermoplastic resin other than the methacrylic resin, a rubbery polymer, or the like.

The methacrylic resin composition that is contained in the light guide of the present embodiment preferably has a glass-transition temperature (Tg) of 115°C to 150°C as measured by the midpoint method in accordance with JIS K 7121. When the glass-transition temperature (Tg) of the methacrylic resin composition is 115°C or higher, deformation of shape such as warping does not arise and optical properties are not adversely affected in a reliability test such as a high temperature aging test. On the other hand, when the glass-transition temperature (Tg) is 150°C or lower, it is possible to avoid melt processing at a very high temperature, inhibit thermal decomposition of the resin, etc., and obtain a good product. The glass-transition temperature (Tg) is preferably 120°C to 145°C, and particularly preferably 125°C to 140°C from a viewpoint of even better achieving the effects described above.

Note that the glass-transition temperature of the methacrylic resin composition can, more specifically, be measured by a method described further below in the EXAMPLES section.

The polymethyl methacrylate-equivalent weight-average molecular weight (Mw), measured by gel permeation chromatography (GPC), of the methacrylic resin composition that is contained in the light guide of the present embodiment is preferably within a range of 110,000 to 170,000, more preferably within a range of 120,000 to 160,000, and even more preferably within a range of 130,000 to 150,000. Although an Mw of less than 110,000 tends to result in a small degree of orientation of methacrylic acid ester monomer units in the methacrylic resin composition and low birefringence, this also tends to result in the formation of cracks during molding and the inability to obtain a light guide having good external appearance. On the other hand, an Mw of more than 170,000 tends to result in a high degree of orientation and high birefringence, and this also tends to reduce fluidity of the resin, increase non-uniformity of thickness of the light guide, and increase the PV value of the light guide. Therefore, an Mw that is within any of the ranges set forth above is preferable in terms of facilitating control of the degree of orientation of the light guide, achieving an excellent balance of mechanical strength and fluidity, and obtaining a light guide having good external appearance at the time of molding and good optical properties. Note that the weight-average molecular weight of the methacrylic resin composition can, more specifically, be measured by a method described further below in the EXAMPLES section.

An absolute value |C_{R}| of a photoelastic coefficient (C_{R}) of the methacrylic resin composition that is contained in the light guide of the present embodiment is preferably 10 × 10⁻¹² Pa⁻¹ or less, more preferably 5.0 × 10⁻¹² Pa⁻¹ or less, even more preferably 3.0 × 10⁻¹² Pa⁻¹ or less, and further preferably 1.0 × 10⁻¹² Pa⁻¹ or less. When the absolute value |C_{R}| of the photoelastic coefficient (C_{R}) of the resin light guide of the present embodiment is 10 × 10⁻¹² Pa⁻¹ or less, photoelastic birefringence arising in accompaniment to stress or dimensional temperature change during fixing of the light guide is sufficiently small, and a light guide resulting in a clear image is obtained. Note that measurement of the photoelastic coefficient (C_{R}) is performed by using a vacuum compression molding machine to obtain a pressed film. In a case in which the surface of the resin light guide is provided with a hard coating or an anti-reflection coating, measurement is performed without these coatings. More specifically, the photoelastic coefficient (C_{R}) can be determined by a method described further below in the EXAMPLES section.

The total luminous transmittance of the methacrylic resin composition that is contained in the light guide of the present embodiment is preferably 85% to 100%, more preferably 87.5% to 99%, and even more preferably 90% to 99%. When the total luminous transmittance of the methacrylic resin composition is within any of the ranges set forth above, the methacrylic resin composition can suitably be used as a light guide. Note that the value of total luminous transmittance is a value measured in accordance with method A of JIS K 7210 and can, more specifically, be measured by a method described further below in the EXAMPLES section.

The methacrylic resin composition that is contained in the light guide of the present embodiment preferably has a low viscosity at the time of injection and high fluidity in order to produce a light guide that is a thin plate. Accordingly, the melt flow rate (MFR) at a temperature of 230°C and a load of 37 N is preferably 1.0 g/10 min to 8.0 g/10 min, more preferably 3.0 g/10 min to 7.0 g/10 min, and even more preferably 5.0 g/10 min to 6.0 g/10 min. When the value of the MFR is more than 8.0 g/10 min, this tends to make control of resin flow at the time of injection difficult, cause the formation of burrs in the light guide, and cause deterioration of external appearance. On the other hand, when the value of the MFR is less than 1.0 g/10 min, it tends not to be possible to obtain a light guide with a target shape due to reduction of resin fluidity.

Note that the melt flow rate is a value measured in accordance with method A of JIS K 7210 and can, more specifically, be measured by a method described further below in the EXAMPLES section.

### -Methacrylic resin-

The following describes the methacrylic resin that is contained in the methacrylic resin composition.

The methacrylic resin may be a resin that is composed mainly of structural units derived from methyl methacrylate, for example, but is not specifically limited thereto. This resin may be a homopolymer of methyl methacrylate or may be a copolymer of methyl methacrylate with one or more copolymerizable monomers such as methyl acrylate, ethyl acrylate, n-propyl acrylate, isopropyl acrylate, butyl acrylate, acrylonitrile, acrylic acid, methacrylic acid, vinylpyridine, vinylmorpholine, vinylpyridone, tetrahydrofurfuryl acrylate, N,N-dimethylaminoethyl acrylate, N,N-dimethylacrylamide, 2-hydroxy acrylate, ethyl 2-(hydroxymethyl)acrylate, ethylene glycol monoacrylate, glycerin monoacrylate, maleic anhydride, N-cyclohexylmaleimide, N-phenylmaleimide, styrene, and α-methylstyrene. Besides the above, a heat resistant methacrylic resin including structural units derived from methyl methacrylate and a lactone ring or glutarimide in a main chain, a methyl methacrylate and low hygroscopicity methacrylic resin, and so forth are also encompassed by the aforementioned resin. One of these resins may be used individually, or two or more of these resins may be used as a blend.

Note that "composed mainly of structural units derived from methyl methacrylate" means that structural units derived from methyl methacrylate constitute 50 mass% or more among structural units in the methacrylic resin.

The methacrylic resin in the present embodiment is preferably a methacrylic resin including a structural unit having a cyclic structure from a viewpoint of transparency and heat resistance.

The methacrylic resin preferably includes at least one structural unit selected from the group consisting of a structural unit derived from an N-substituted maleimide monomer, a glutarimide-based structural unit, an aromatic vinyl structural unit, an alicyclic vinyl structural unit, and a lactone ring structural unit as the aforementioned structural unit having a cyclic structure. Moreover, it is particularly preferable for the structural unit having a cyclic structure to include a structural unit derived from an N-substituted maleimide monomer in terms of ease of high-level control of optical properties such as intrinsic birefringence and photoelastic coefficient without blending with another thermoplastic resin.

### --Structural unit derived from N-substituted maleimide monomer--

Next, the structural unit derived from an N-substituted maleimide monomer is described.

The structural unit derived from an N-substituted maleimide monomer may be at least one structural unit selected from the group consisting of a structural unit represented by the following formula (1) and a structural unit represented by the following formula (2), with the inclusion of both a structural unit represented by the following formula (1) and a structural unit represented by the following formula (2) being preferable.

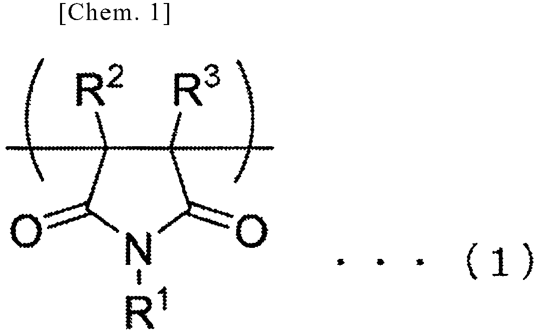

In formula (1), R¹ represents an arylalkyl group having 7 to 14 carbon atoms or an aryl group having 6 to 14 carbon atoms, and R² and R³ each represent, independently of each other, a hydrogen atom, an oxygen atom, a sulfur atom, an alkyl group having 1 to 12 carbon atoms, or an aryl group having 6 to 14 carbon atoms.

In a case in which R² or R³ is an aryl group, R² or R³ may include a halogen atom as a substituent.

Moreover, R¹ may be substituted with a substituent such as a halogen atom, an alkyl group having 1 to 6 carbon atoms, an alkoxy group having 1 to 6 carbon atoms, a nitro group, or a benzyl group.

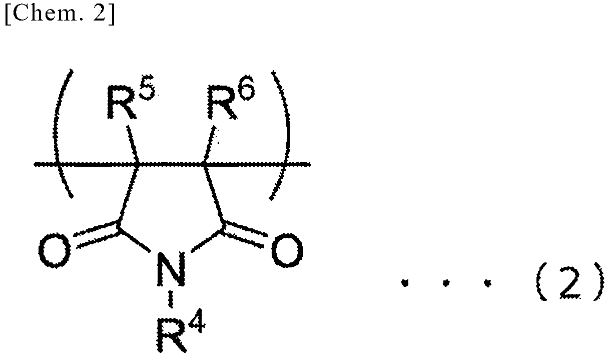

In formula (2), R⁴ represents a hydrogen atom, a cycloalkyl group having 3 to 12 carbon atoms, or an alkyl group having 1 to 12 carbon atoms, and R⁵ and R⁶ each represent, independently of each other, a hydrogen atom, an oxygen atom, a sulfur atom, an alkyl group having 1 to 12 carbon atoms, or an aryl group having 6 to 14 carbon atoms.

In the preceding formula (1), the arylalkyl group having 7 to 14 carbon atoms may be a benzyl group, a phenylethyl group, a phenylpropyl group, a naphthylmethyl group, a naphthylethyl group, a naphthylpropyl group, or the like, for example, without any limitations.

In the preceding formula (1) and formula (2), the aryl group having 6 to 14 carbon atoms may be a phenyl group, a tolyl group, a xylyl group, a naphthyl group, a biphenyl group, an anthracenyl group, a phenanthryl group, or the like, for example, without any limitations.

In the preceding formula (1) and formula (2), the alkyl group having 1 to 12 carbon atoms may be linear or branched and may be a methyl group, an ethyl group, an n-propyl group, an isopropyl group, an n-butyl group, a secbutyl group, an isobutyl group, a tert-butyl group, a 2-methylbutyl group, an n-pentyl group, a 2-pentyl group, a 3-pentyl group, a 2,2-dimethylpropyl group, an n-hexyl group, a heptyl group, an n-octyl group, a 1,1,3,3-tetramethylbutyl group, a 2-ethylhexyl group, a nonyl group, a decyl group, an undecyl group, a dodecyl group, or the like, for example, without any specific limitations.

In the preceding formula (1), the halogen atom may be a fluorine atom, a chlorine atom, a bromine atom, an iodine atom, or the like, for example.

In the preceding formula (1), the alkoxy group having 1 to 6 carbon atoms may be a methoxy group, an ethoxy group, an n-butoxy group, a methoxyethoxy group, or the like, for example, without any limitations.

In the preceding formula (1), the cycloalkyl group having 3 to 12 carbon atoms may be a cyclopropyl group, a cyclopropylmethyl group, a cyclobutyl group, a cyclopentyl group, a cyclohexyl group, a cyclohexylmethyl group, a trimethylcyclohexyl group, a thujyl group, a norbornyl group, a bornyl group, a norcaryl group, a caryl group, a menthyl group, a norpinyl group, a pinyl group, a 1-adamantyl group, a 2-adamantyl group, or the like, for example, without any limitations.

The following gives specific examples.

Examples of monomers (N-arylmaleimides, N-aromatic-substituted maleimides, etc.) that form a structural unit represented by formula (1) include N-phenylmaleimide, N-benzylmaleimide, N-(2-chlorophenyl)maleimide, N-(4-chlorophenyl)maleimide, N-(4-bromophenyl)maleimide, N-(2-methylphenyl)maleimide, N-(2,6-dimethylphenyl)maleimide, N-(2-ethylphenyl)maleimide, N-(2-methoxyphenyl)maleimide, N-(2-nitrophenyl)maleimide, N-(2,4,6-trimethylphenyl)maleimide, N-(4-benzylphenyl)maleimide, N-(2,4,6-tribromophenyl)maleimide, N-naphthylmaleimide, N-anthracenylmaleimide, 3-methyl-1-phenyl-1H-pyrrole-2,5-dione, 3,4-dimethyl-1-phenyl-1H-pyrrole-2,5-dione, 1,3-diphenyl-1H-pyrrole-2,5-dione, and 1,3,4-triphenyl-1H-pyrrole-2,5-dione.

Of these monomers, N-phenylmaleimide and N-benzylmaleimide are preferable in terms of excellent heat resistance and optical properties such as birefringence.

One of these monomers may be used individually, or two or more of these monomers may be used together.

Examples of monomers that form a structural unit represented by formula (2) include N-methylmaleimide, N-ethylmaleimide, N-n-propylmaleimide, N-isopropylmaleimide, N-n-butylmaleimide, N-isobutylmaleimide, N-s-butylmaleimide, N-t-butylmaleimide, N-n-pentylmaleimide, N-n-hexylmaleimide, N-n-heptylmaleimide, N-n-octylmaleimide, N-laurylmaleimide, N-cyclopentylmaleimide, N-cyclohexylmaleimide, 1-cyclohexyl-3-methyl-1H-pyrrole-2,5-dione, 1-cyclohexyl-3,4-dimethyl-1H-pyrrole-2,5-dione, 1-cyclohexyl-3-phenyl-1H-pyrrole-2,5-dione, and 1-cyclohexyl-3,4-diphenyl-1H-pyrrole-2,5-dione.

Of these monomers, N-methylmaleimide, N-ethylmaleimide, N-isopropylmaleimide, and N-cyclohexylmaleimide are preferable in terms of providing the methacrylic resin with excellent weatherability, and N-cyclohexylmaleimide is particularly preferable in terms of providing the excellent low moisture absorbency demanded of optical materials in recent years.

One of these monomers may be used individually, or two or more of these monomers may be used together.

It is particularly preferable that a structural unit represented by formula (1) and a structural unit represented by formula (2) are used together in the methacrylic resin of the methacrylic resin composition in order that highly controlled birefringence characteristics can be expressed.

A molar ratio (X1/X2) of the content (X1) of structural units represented by formula (1) relative to the content (X2) of structural units represented by formula (2) is preferably more than 0 and not more than 15, and more preferably more than 0 and not more than 10. When the molar ratio (X1/X2) is within any of these ranges, the resin light guide of the present embodiment maintains transparency without yellowing and exhibits good heat resistance and good photoelastic characteristics without loss of environmental resistance.

The content of N-substituted maleimide monomer-derived structural units is preferably within a range of 5 mass% to 40 mass%, and more preferably within a range of 5 mass% to 35 mass% when the methacrylic resin is taken to be 100 mass%. When the content of N-substituted maleimide monomer-derived structural units is within any of these ranges, the methacrylic resin exhibits a more sufficient improvement in heat resistance and also provides more favorable improvements in weatherability, low water absorption, and optical properties. Note that restricting the content of N-substituted maleimide monomer-derived structural units to 40 mass% or less is effective for preventing reduction of physical properties of the methacrylic resin arising when a large amount of monomer remains unreacted due to reduced reactivity of monomer components in the polymerization reaction.

Also, by appropriately adjusting the content of N-substituted maleimide monomer-derived structural units within any of these ranges, it is possible to reduce birefringence caused by orientation or residual stress during molding and obtain a resin light guide for a display having an average absolute value of in-plane retardation of 10 nm or less. The optimal content of N-substituted maleimide monomer-derived structural units varies depending on the type of N-substituted maleimide. For example, in a case in which methyl methacrylate is used as a methacrylic acid ester monomer and N-phenylmaleimide and N-cyclohexylmaleimide are used as N-substituted maleimide monomers, the contents of structural units derived from methyl methacrylate, structural units derived from N-phenylmaleimide, and structural units derived from N-cyclohexylmaleimide are preferably adjusted within ranges of 79 mass% to 83 mass%, 6 mass% to 8 mass%, and 11 mass% to 13 mass%, respectively.

The methacrylic resin that includes a structural unit derived from an N-substituted maleimide monomer may include structural units derived from other monomers that are copolymerizable with a methacrylic acid ester monomer and an N-substituted maleimide monomer to the extent that the objects of the present disclosure are not impaired.

Examples of other copolymerizable monomers that can be used include aromatic vinyls; unsaturated nitriles; acrylic acid esters including a cyclohexyl group, a benzyl group, or an alkyl group having 1 to 18 carbon atoms; glycidyl compounds; and unsaturated carboxylic acids.

Examples of the aforementioned aromatic vinyls include styrene, α-methylstyrene, and divinylbenzene.

Examples of the aforementioned unsaturated nitriles include acrylonitrile, methacrylonitrile, and ethacrylonitrile.

Examples of the aforementioned acrylic acid esters include methyl acrylate, ethyl acrylate, propyl acrylate, isopropyl acrylate, and butyl acrylate.

Examples of the aforementioned glycidyl compounds include glycidyl (meth)acrylate.

Examples of the aforementioned unsaturated carboxylic acids include acrylic acid, methacrylic acid, itaconic acid, maleic acid, fumaric acid, and semi-esterified products and acid anhydrides thereof.

The methacrylic resin may include just one type of structural unit derived from another copolymerizable monomer or may include two or more types of structural units derived from other copolymerizable monomers.

The content of structural units derived from such other copolymerizable monomers is preferably 0 mass% to 10 mass%, more preferably 0 mass% to 9 mass%, and even more preferably 0 mass% to 8 mass% when the methacrylic resin is taken to be 100 mass%.

The content of structural units derived from other monomers being within any of the ranges set forth above is preferable in terms that moldability and mechanical properties of the resin can be enhanced without losing the intended effects of introducing a cyclic structure into a main chain.

Note that the content of N-substituted maleimide monomer-derived structural units and the content of structural units derived from other copolymerizable monomers can be determined by ¹H-NMR and ¹³C-NMR measurements. For example, ¹H-NMR and ¹³C-NMR measurements can be made at a measurement temperature of 40°C using CDCl₃ or DMSO-d₆ as a measurement solvent.

### --Glutarimide-based structural unit--

The methacrylic resin including a glutarimide-based structural unit in a main chain may be a methacrylic resin including a glutarimide-based structural unit that is described in JP 2006-249202 A, JP 2007-009182 A, JP 2007-009191 A, JP 2011-186482 A, WO 2012/114718 A1, or the like, for example, and can be formed by a method described in any of these publications.

A glutarimide-based structural unit that is a constituent of the methacrylic resin may be formed after resin polymerization.

Specifically, the glutarimide-based structural unit may be a structural unit that is represented by the following formula (3).

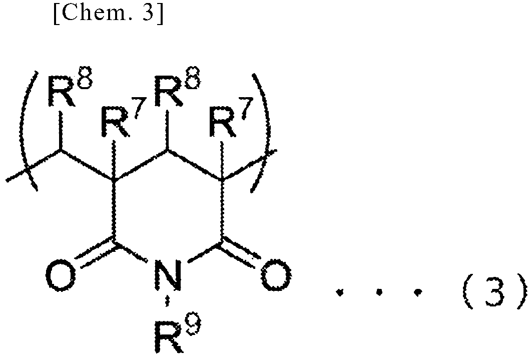

In the preceding formula (3), it is preferable that R⁷ and R⁸ are each, independently of each other, a hydrogen atom or a methyl group, and R⁹ is a hydrogen atom, a methyl group, a butyl group, or a cyclohexyl group, and more preferable that R⁷ is a methyl group, R⁸ is a hydrogen atom, and R⁹ is a methyl group.

The methacrylic resin may include just one type of glutarimide-based structural unit or may include a plurality of types of glutarimide-based structural units.

In the methacrylic resin including a glutarimide-based structural unit, the content of glutarimide-based structural units is preferably within a range of 3 mass% to 70 mass%, and more preferably within a range of 3 mass% to 60 mass% when the methacrylic resin is taken to be 100 mass%.

The content of glutarimide-based structural units being within any of the ranges set forth above is preferable in terms that a resin having good moldability, heat resistance, and optical properties can be obtained.

Also, by appropriately adjusting the content of glutarimide-based structural units within any of these ranges, it is possible to reduce birefringence caused by orientation or residual stress during molding and obtain a resin light guide for a display having an absolute value of in-plane retardation of 10 nm or less. The optimal content of glutarimide-based structural units varies depending on the type of substituents R⁷ to R⁹ in formula (3). For example, in a case in which R⁷ and R⁸ are hydrogen atoms and R⁹ is a methyl group, a glutarimide-based structural unit content that is within a range of 3 mass% to 10 mass% makes it possible to reduce birefringence caused by orientation or residual stress during molding and obtain a resin light guide for a display having an absolute value of in-plane retardation of 10 nm or less.

Note that the content of glutarimide-based structural units in the methacrylic resin can be determined by a method described in the previously mentioned patent literature.

The methacrylic resin including a glutarimide-based structural unit may further include an aromatic vinyl structural unit as necessary.

The aromatic vinyl monomer may be styrene or α-methylstyrene, but is not specifically limited thereto, and is preferably styrene.

Although no specific limitations are placed on the content of aromatic vinyl structural units in the methacrylic resin including a glutarimide-based structural unit, the content of aromatic vinyl structural units is preferably 0 mass% to 20 mass% when the methacrylic resin including a glutarimide-based structural unit is taken to be 100 mass%.

The content of aromatic vinyl structural units being within the range set forth above is preferable in terms that both heat resistance and excellent photoelastic characteristics can be obtained.

For example, in the case of a resin that is obtained through glutarimidization of a methyl methacrylate-styrene copolymer resulting from copolymerization of methyl methacrylate as a methacrylic acid ester monomer and styrene as an aromatic vinyl monomer, adjusting structural units derived from methyl methacrylate within a range of 65 mass% to 90 mass%, structural units derived from styrene within a range of 5 mass% to 15 mass%, and glutarimide-based structural units within a range of 5 mass% to 20 mass% makes it possible to reduce birefringence caused by orientation or residual stress during molding and obtain a resin light guide for a display having an absolute value of in-plane retardation of 10 nm or less.

### --Aromatic vinyl structural unit--

The aromatic vinyl structural unit may be a structural unit derived from styrene or α-methylstyrene, for example, without any specific limitations, and is preferably a structural unit derived from styrene.

### --Alicyclic vinyl structural unit--

The alicyclic vinyl structural unit can be formed by a method described in JP 2006-291184 A, JP 2006-291184 A, JP 2014-77043 A, JP 2014-77044 A, or the like, for example.

### --Lactone ring structural unit--

The methacrylic resin including a lactone ring structural unit can be formed, for example, by a method described in JP 2001-151814 A, JP 2004-168882 A, JP 2005-146084 A, JP 2006-96960 A, JP 2006-171464 A, JP 2007-63541 A, JP 2007-297620 A, JP 2010-180305 A, or the like.

A lactone ring structural unit that is a constituent of the methacrylic resin may be formed after resin polymerization.

A six-membered ring is preferable as a lactone ring structural unit in the present embodiment since this provides excellent cyclic structure stability.

For example, a structure represented by the following formula (4) is particularly preferable as a lactone ring structural unit that is a six-membered ring.

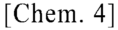

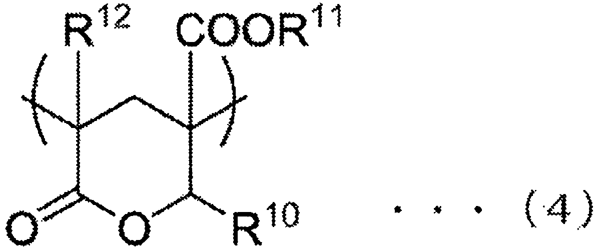

In the preceding formula (4), R¹⁰, R¹¹, and R¹² are each, independently of one another, a hydrogen atom or an organic residue having 1 to 20 carbon atoms.

Examples of the organic residue include saturated aliphatic hydrocarbon groups (alkyl groups, etc.) having 1 to 20 carbon atoms such as a methyl group, an ethyl group, and a propyl group; unsaturated aliphatic hydrocarbon groups (alkenyl groups, etc.) having 2 to 20 carbon atoms such as an ethenyl group and a propenyl group; aromatic hydrocarbon groups (aryl groups, etc.) having 6 to 20 carbon atoms such as a phenyl group and a naphthyl group; and groups in which at least one hydrogen atom of any of these saturated aliphatic hydrocarbon groups, unsaturated aliphatic hydrocarbon groups, and aromatic hydrocarbon groups has been replaced by at least one group selected from the group consisting of a hydroxy group, a carboxyl group, an ether group, and an ester group.

The lactone ring structural unit may be formed, for example, by copolymerizing an acrylic acid-based monomer having a hydroxy group and a methacrylic acid ester monomer such as methyl methacrylate to introduce a hydroxy group and an ester group or carboxyl group into the molecular chain, and then causing dealcoholization (esterification) or dehydration condensation (hereinafter, also referred to as a "cyclocondensation reaction") between the hydroxy group and the ester group or carboxyl group.

Examples of acrylic acid-based monomers having a hydroxy group that can be used in polymerization include 2-(hydroxymethyl)acrylic acid, 2-(hydroxyethyl)acrylic acid, alkyl 2-(hydroxymethyl)acrylates (for example, methyl 2-(hydroxymethyl)acrylate, ethyl 2-(hydroxymethyl)acrylate, isopropyl 2-(hydroxymethyl)acrylate, n-butyl 2-(hydroxymethyl)acrylate, and t-butyl 2-(hydroxymethyl)acrylate), and alkyl 2-(hydroxyethyl)acrylates. Moreover, 2-(hydroxymethyl)acrylic acid and alkyl 2-(hydroxymethyl)acrylates, which are monomers having a hydroxyalkyl moiety are preferable, and methyl 2-(hydroxymethyl)acrylate and ethyl 2-(hydroxymethyl)acrylate are particularly preferable.

In the methacrylic resin including a lactone ring structural unit, the content of lactone ring structural units is preferably 5 mass% to 40 mass%, and more preferably 5 mass% to 35 mass% relative to 100 mass% of the methacrylic resin.

When the content of lactone ring structural units is within any of these ranges, effects resulting from the introduction of a cyclic structure, such as improved solvent resistance and improved surface hardness, can be exhibited while maintaining moldability. Also, by appropriately adjusting the content of lactone ring structural units within any of these ranges, it is possible to reduce birefringence caused by orientation or residual stress during molding and obtain a resin light guide for a display having an absolute value of in-plane retardation of 10 nm or less.

Note that the content of lactone ring structures in the methacrylic resin can be determined by a method described in the previously mentioned patent literature.

The methacrylic resin including a lactone ring structural unit may include structural units derived from other monomers that are copolymerizable with the above-described methacrylic acid ester monomer and acrylic acid-based monomer having a hydroxy group.

Examples of such other copolymerizable monomers include monomers having a polymerizable double bond such as styrene, vinyltoluene, α-methylstyrene, α-hydroxymethylstyrene, α-hydroxyethylstyrene, acrylonitrile, methacrylonitrile, methallyl alcohol, ethylene, propylene, 4-methyl-1-pentene, vinyl acetate, 2-hydroxymethyl-1-butene, methyl vinyl ketone, N-vinylpyrrolidone, and N-vinylcarbazole.

Just one of these other monomers (constitutional units) may be included, or two or more of these other monomers (constitutional units) may be included.

The content of structural units derived from such other copolymerizable monomers is preferably 0 mass% to 20 mass% relative to 100 mass% of the methacrylic resin, and is more preferably less than 10 mass%, and even more preferably less than 7 mass% from a viewpoint of weatherability.

The methacrylic resin in the present embodiment may include just one type of structural unit or two or more types of structural units derived from the other copolymerizable monomers described above.

### -Production method of methacrylic resin-

The following describes the production method of the methacrylic resin of the present embodiment.

The polymerization process in the production method of the methacrylic resin can be a batch process, a semi-batch process, or a continuous process. A batch process referred to here is a process in which all raw materials are charged into a reactor, a reaction is subsequently initiated and caused to proceed, and the product is recovered at the end of the reaction. Moreover, a semi-batch process is a process in which either raw material charging or product recovery is performed concurrently while the reaction is ongoing. Furthermore, a continuous process is a process in which both raw material charging and product recovery are performed concurrently while the reaction is ongoing. A semi-batch process in which charging of a portion of raw materials is performed after a reaction has been initiated is preferable as the production method of the methacrylic resin from a viewpoint of precisely controlling the copolymer composition.

Although a continuous process can be adopted, it is preferable that a continuous process is not adopted as the production method of the methacrylic resin for the reason described below. A continuous process is advantageous in that the difference in monomer composition between fractions with different molecular weights in the methacrylic resin can be reduced when a polymerization reaction is carried out in a single complete mixing reactor, but a large amount of unreacted monomer remains after polymerization, which tends to adversely affect the color tone. On the other hand, although the amount of unreacted monomer can be reduced by using a plug flow reactor, this tends to increase the difference in monomer composition between fractions with different molecular weights in the methacrylic resin. It is also possible to reduce the amount of unreacted monomer in a situation in which a plurality of complete mixing reactors or a complete mixing reactor and a plug flow reactor are combined in series, but the aforementioned difference in monomer composition between fractions tends to increase.

Emulsion polymerization, solution polymerization, radical polymerization, anionic polymerization, cationic polymerization, or the like may be adopted as the polymerization method of the methacrylic resin without any specific limitations.

Examples of polymerization solvents that may be used in the production method of the methacrylic resin include, but are not specifically limited to, aromatic hydrocarbons such as toluene, xylene, ethylbenzene, and isopropylbenzene; esters such as methyl isobutyrate; ketones such as methyl isobutyl ketone, butyl cellosolve, methyl ethyl ketone, and cyclohexanone; and polar solvents such as dimethylformamide and 2-methylpyrrolidone.

Moreover, an alcohol such as methanol, ethanol, or isopropanol may also be used together as the polymerization solvent to the extent that dissolution of polymerization product during polymerization is not impaired.

No specific limitations are placed on the amount of the solvent during polymerization so long as polymerization proceeds, precipitation of copolymer or used monomers does not occur during production, and it is an amount that can easily be removed. For example, when the total amount of compounded monomers is taken to be 100 parts by mass, the amount of the solvent is preferably 10 parts by mass to 200 parts by mass, more preferably 25 parts by mass to 200 parts by mass, even more preferably 50 parts by mass to 200 parts by mass, and further preferably 50 parts by mass to 150 parts by mass.

Any initiator that is commonly used in radical polymerization can be used as a polymerization initiator, and examples thereof include organic peroxides such as cumene hydroperoxide, diisopropylbenzene hydroperoxide, di-t-butyl peroxide, lauroyl peroxide, benzoyl peroxide, t-butylperoxy isopropyl carbonate, t-amyl peroxy-2-ethylhexanoate, t-amyl peroxyisononanoate, and 1,1-di(t-butylperoxy)cyclohexane; and azo compounds such as 2,2'-azobis(isobutyronitrile), 1,1'-azobis(cyclohexanecarbonitrile), 2,2'-azobis(2,4-dimethylvaleronitrile), and dimethyl-2,2"-azobisisobutyrate.

One of these polymerization initiators may be used individually, or two or more of these polymerization initiators may be used together.

These polymerization initiators may be added at any stage so long as the polymerization reaction is in progress.

The additive amount of the polymerization initiator when the total amount of monomers used in polymerization is taken to be 100 parts by mass may be 0.01 parts by mass to 1 part by mass, and is preferably 0.05 parts by mass to 0.5 parts by mass.

A chain transfer agent that is commonly used in radical polymerization can be used as a chain transfer agent, and examples thereof include mercaptan compounds such as n-butyl mercaptan, n-octyl mercaptan, n-decyl mercaptan, n-dodecyl mercaptan, and 2-ethylhexyl thioglycolate; halogen compounds such as carbon tetrachloride, methylene chloride, and bromoform; and unsaturated hydrocarbon compounds such as o-methylstyrene dimer, α-terpinene, dipentene, and terpinolene.

One of these chain transfer agents may be used individually, or two or more of these chain transfer agents may be used together.

These chain transfer agents may be added at any stage, without any specific limitations, so long as the polymerization reaction is in progress.

The additive amount of the chain transfer agent when the total amount of monomers used in polymerization is taken to be 100 parts by mass may be 0.01 parts by mass to 1 part by mass, and is preferably 0.05 parts by mass to 0.5 parts by mass.

In a situation in which solution polymerization is adopted, no specific limitations are placed on the method by which a polymerized product is collected from the polymerization solution obtained through solution polymerization. Examples of methods that can be adopted include a method in which the polymerization solution is added into an excess of a poor solvent in which the polymerized product obtained through polymerization does not dissolve, such as a hydrocarbon solvent or an alcohol solvent, treatment (emulsifying dispersion) is subsequently performed using a homogenizer, and unreacted monomer is separated from the polymerization solution by pretreatment such as liquid-liquid extraction or solid-liquid extraction; and a method in which the polymerization solvent and unreacted monomer are separated by a step referred to as a devolatilization step to collect the polymerized product.

The devolatilization step is a step in which volatile content such as the polymerization solvent, residual monomer, and reaction by-products are removed under heated and reduced pressure conditions.

A devolatilization device comprising a tubular heat exchanger and a devolatilization tank; a thin film evaporator such as a WIPRENE or EXEVA produced by Kobelco Eco-Solutions Co., Ltd. or a Kontro or Diagonal-Blade Kontro produced by Hitachi, Ltd.; a vented extruder having sufficient residence time and surface area for exhibiting devolatilization capability; or the like, for example, may be adopted as a device used in the devolatilization step.

Moreover, it is possible to adopt a devolatilization step or the like in which a devolatilization device that is a combination of two or more of these devices is used.

From a viewpoint of improving color tone, it is preferable to use a devolatilization device that has a heat exchanger and a decompression vessel as main components thereof and that has a structure without rotating parts.

Specifically, it is possible to employ a devolatilization device that includes a devolatilization tank having a configuration where a decompression unit is attached to a decompression vessel, which is sized to be suitable for devolatilization and is provided with a heat exchanger disposed in the upper part thereof, and that also includes a discharge device such as a gear pump for discharging a polymerized product after devolatilization.

In this devolatilization device, a polymerization solution is preheated by feeding it to the heat exchanger (for example, a multi-tube heat exchanger, a plate-fin heat exchanger, or a flat plate heat exchanger having a flat plate channel and a heater), which is disposed in the upper part of the decompression vessel and has been heated, and then the polymerization solution is fed to the devolatilization tank, which is in a heated and depressurized state, so as to separate and remove the copolymer from the polymerization solvent, a mixture of unreacted raw materials, polymerization by-products, and so forth. The use of a devolatilization device such as described above that does not have a rotating part is preferable since a methacrylic resin having good color tone can be obtained.

The treatment temperature of the devolatilization device is preferably 150°C to 350°C, more preferably 170°C to 300°C, and even more preferably 200°C to 280°C. Residual volatile content can be limited by adopting a temperature that is not lower than any of the lower limits, whereas coloring and decomposition of the resultant methacrylic resin can be inhibited by adopting a temperature that is not higher than any of the upper limits.

### -Additives-

The methacrylic resin composition contained in the light guide of the present embodiment may contain various additives to the extent that the effects according to the present disclosure are not significantly impaired.

Examples of such additives include, but are not specifically limited to, antioxidants; light stabilizers such as hindered amine light stabilizers; ultraviolet absorbers; mold release agents; thermoplastic resins other than methacrylic resins; softeners and plasticizers such as paraffinic process oils, naphthenic process oils, aromatic process oils, paraffin, organic polysiloxanes, and mineral oils; flame retardants; antistatic agents; reinforcers such as organic fibers, inorganic fillers such as pigments (iron oxide, etc.), glass fibers, carbon fibers, and metal whiskers; colorants; organophosphorus compounds such as phosphorus acid esters, phosphonites, and phosphoric acid esters; and mixtures of any of the preceding examples.

### --Antioxidant--

The methacrylic resin composition that is contained in the light guide of the present embodiment preferably contains an antioxidant that suppresses degradation and coloring in molding or during use.

The antioxidant may be a hindered phenol antioxidant, a phosphoric antioxidant, a sulfuric antioxidant, or the like, for example, but is not limited thereto. In order for the methacrylic resin composition to enable high transferability of micro-protuberances of a mold while also allowing a high degree of control of distortion or warping of the surface of a molded product, it is vital to maintain resin inside of a mold cavity at a high temperature and to provide an appropriate cooling time. In order to achieve the desired thermal stability in a case in which heat history is received over a long period, it is necessary to increase the additive amount of a heat stabilizer, and from a viewpoint of inhibiting bleed-out of the heat stabilizer and preventing sticking of the heat stabilizer to a mold, it is preferable to use a plurality of types of heat stabilizers together. For example, it is preferable to use a hindered phenol antioxidant together with at least one selected from a phosphoric antioxidant and a sulfuric antioxidant.

One of these antioxidants may be used individually, or two or more of these antioxidants may be used together.

Examples of the hindered phenol antioxidant include, but are not limited to, pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, 3,3',3'',5,5',5''-hexa-tert-butyl-a,a',a''-(mesitylene-2,4,6-triyl)tri-p-cresol, 4,6-bis(octylthiomethyl)-o-cresol, 4,6-bis(dodecylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylene)methyl]-1,3,5-triazine-2,4,6(1H,3H,5H)-trione, 2,6-di-tert-butyl-4-(4,6-bis(octylthio)-1,3,5-triazin-2-ylamine)phenol, 2-[1-(2-hydroxy-3,5-di-tert-pentylphenyl)ethyl]-4,6-di-tert-pentylphenyl acrylate, and 2-tert-butyl-4-methyl-6-(2-hydroxy-3-tert-butyl-5-methylbenzyl)phenyl acrylate.

In particular, pentaerythritol tetrakis[3-(3,5-di-tert-butyl-4-hydroxyphenyl)propionate], octadecyl-3-(3,5-di-t-butyl-4-hydroxyphenyl)propionate, and 2-[1-(2-hydroxy-3,5-di-tert-pentylphenyl)ethyl]-4,6-di-tert-pentylphenyl acrylate are preferable.

Also, a commercially available phenolic antioxidant may be used as the hindered phenol antioxidant serving as an antioxidant. Examples of such commercially available phenolic antioxidants include, but are not limited to, Irganox 1010 (pentaerythritol tetrakis[3-(3,5-di-t-butyl-4-hydroxyphenyl)propionate]; produced by BASF Corporation), Irganox 1076 (octadecyl-3-(3,5-di-t-butyl-4-hydroxyphenyl)propionate; produced by BASF Corporation), Irganox 1330 (3,3',3",5,5',5"-hexa-t-butyl-a,a',a''-(mesitylene-2,4,6-triyl)tri-p-cresol; produced by BASF Corporation), Irganox 3114 (1,3,5-tris(3,5-di-t-butyl-4-hydroxybenzyl)-1,3,5-triazine-2,4,6(1H,3H,5H)-trione; produced by BASF Corporation), Irganox 3125 (produced by BASF Corporation), ADK STAB AO-60 (pentaerythritol tetrakis[3-(3,5-di-t-butyl-4-hydroxyphenyl)propionate]; produced by Adeka Corporation), ADK STAB AO-80 (3,9-bis{2-[3-(3-t-butyl-4-hydroxy-5-methylphenyl)propionyloxy]-1,1-dimethylethyl}-2,4,8,10-tetraoxaspiro[5.5]undecane; produced by Adeka Corporation), Sumilizer BHT (produced by Sumitomo Chemical Co., Ltd.), Cyanox 1790 (produced by Cytec Solvay Group), Sumilizer GA-80 (produced by Sumitomo Chemical Co., Ltd.), Sumilizer GS (2-[1-(2-hydroxy-3,5-di-tert-pentylphenyl)ethyl]-4,6-di-tert-pentylphenyl acrylate; produced by Sumitomo Chemical Co., Ltd.), Sumilizer GM (2-tert-butyl-4-methyl-6-(2-hydroxy-3-tert-butyl-5-methylbenzyl)phenyl acrylate; produced by Sumitomo Chemical Co., Ltd.), and vitamin E (produced by Eisai Co., Ltd.).

Of these commercially available phenolic antioxidants, Irganox 1010, ADK STAB AO-60, ADK STAB AO-80, Irganox 1076, Sumilizer GS, and the like are preferable from a viewpoint of an effect of imparting thermal stability to the resin.

Just one of these phenolic antioxidants may be used individually, or two or more of these phenolic antioxidants may be used together.

Examples of phosphoric antioxidants that may be used as the antioxidant include, but are not limited to, tris(2,4-di-t-butylphenyl) phosphite, phosphorous acid bis(2,4-bis(1,1-dimethylethyl)-6-methylphenyl)ethyl ester, tetrakis(2,4-di-t-butylphenyl)(1,1-biphenyl)-4,4'-diyl bisphosphonite, bis(2,4-di-t-butylphenyl)pentaerythritol diphosphite, bis(2,6-di-t-butyl-4-methylphenyl)pentaerythritol diphosphite, bis(2,4-dicumylphenyl)pentaerythritol diphosphite, tetrakis(2,4-t-butylphenyl)(1,1-biphenyl)-4,4'-diyl bisphosphonite, di-t-butyl-m-cresyl-phosphonite, and 4-[3-[(2,4,8,10-tetra-tert-butyldibenzo[d,f][1,3,2]dioxaphosphepin)-6-yloxy]propyl]-2-methyl-6-tert-butylphenol.

A commercially available phosphoric antioxidant may be used as the phosphoric antioxidant. Examples of such commercially available phosphoric antioxidants include, but are not limited to, Irgafos 168 (tris(2,4-di-t-butylphenyl) phosphite; produced by BASF Corporation), Irgafos 12 (tris[2-[[2,4,8,10-tetra-t-butyldibenzo[d,f][1,3,2]dioxaphosphepin-6-yl]oxy] ethyl]amine; produced by BASF Corporation), Irgafos 38 (phosphorous acid bis(2,4-bis(1,1-dimethylethyl)-6-methylphenyl)ethyl ester; produced by BASF Corporation), ADK STAB 329K (produced by Adeka Corporation), ADK STAB PEP-36 (produced by Adeka Corporation), ADK STAB PEP-36A (produced by Adeka Corporation), ADK STAB PEP-8 (produced by Adeka Corporation), ADK STAB HP-10 (produced by Adeka Corporation), ADK STAB 2112 (produced by Adeka Corporation), ADK STAB 1178 (produced by Adeka Corporation), ADK STAB 1500 (produced by Adeka Corporation), Sandstab P-EPQ (produced by Clariant), Weston 618 (produced by GE Corporation), Weston 619G (produced by GE Corporation), Ultranox 626 (produced by GE Corporation), Sumilizer GP (4-[3-[(2,4,8,10-tetra-tert-butyldibenzo[d,f][1,3,2]dioxaphosphepin)-6-yloxy]propyl]-2-methyl-6-tertbutylphenol; produced by Sumitomo Chemical Co., Ltd.), and HCA (9,10-dihydro-9-oxa-10-phosphaphenanthrene-10-oxide; produced by Sanko Co., Ltd.).

Of these commercially available phosphoric antioxidants, Irgafos 168, ADK STAB PEP-36, ADK STAB PEP-36A, ADK STAB HP-10, and ADK STAB 1178 are preferable from a viewpoint of an effect of imparting thermal stability to the resin and an effect of combined use with various antioxidants, and ADK STAB PEP-36A and ADK STAB PEP-36 are particularly preferable.

Just one of these phosphoric antioxidants may be used individually, or two or more of these phosphoric antioxidants may be used together.

Examples of sulfuric antioxidants that may be used as the antioxidant include, but are not limited to, 2,4-bis(dodecylthiomethyl)-6-methylphenol (Irganox 1726 produced by BASF Corporation), 2,4-bis(octylthiomethyl)-6-methylphenol (Irganox 1520L produced by BASF Corporation), 2,2-bis[[3-(dodecylthio)-1-oxopropoxy]methyl]propane-1,3-diyl bis[3-(dodecylthio)propionate] (ADK STAB AO-412S produced by Adeka Corporation), 2,2-bis[[3-(dodecylthio)-1-oxopropoxy]methyl]propane-1,3-diyl bis[3-(dodecylthio)propionate] (KEMINOX PLS produced by Chemipro Kasei Kaisha, Ltd.), and di(tridecyl)-3,3'-thiodipropionate (AO-503 produced by Adeka Corporation).

Of these commercially available sulfuric antioxidants, ADK STAB AO-412S and KEMINOX PLS are preferable from a viewpoint of an effect of imparting thermal stability to the resin and an effect of combined use with various antioxidants, and also from a viewpoint of handleability.

Just one of these sulfuric antioxidants may be used individually, or two or more of these sulfuric antioxidants may be used together.

Although the content of the antioxidant may be any amount with which an effect of improving thermal stability is obtained, an excessive content may lead to problems such as bleed-out during processing. Accordingly, the content of the antioxidant relative to 100 parts by mass of the methacrylic resin is preferably 5 parts by mass or less, more preferably 3 parts by mass or less, even more preferably 1 part by mass or less, further preferably 0.8 parts by mass or less, even further preferably 0.01 parts by mass to 0.8 parts by mass, and particularly preferably 0.01 parts by mass to 0.5 parts by mass.

### -Hindered amine light stabilizer-

The resin composition that is contained in the resin light guide for a display of the present embodiment can contain a hindered amine light stabilizer.

The hindered amine light stabilizer is not specifically limited but is preferably a compound including three or more cyclic structures. It is preferable that the cyclic structures are at least one selected from the group consisting of aromatic rings, aliphatic rings, aromatic heterocycles, and nonaromatic heterocycles, and in a case in which a single compound includes two or more cyclic structures, these cyclic structures may be the same as or different from one another.

Specific examples of the hindered amine light stabilizer include, but are not limited to, bis(1,2,2,6,6-pentamethyl-4-piperidyl) [[3,5-bis(1,1-dimethylethyl)-4-hydroxyphenyl]methyl]butylmalonate; a mixture of bis(1,2,2,6,6-pentamethyl-4-piperidyl) sebacate and methyl-1,2,2,6,6-pentamethyl-4-piperidyl sebacate; bis(2,2,6,6-tetramethyl-4-piperidyl) sebacate; N,N'-bis(2,2,6,6-tetramethyl-4-piperidyl)-N,N'-diformylhexamethylenediamine; a polycondensate of dibutylamine, 1,3,5-triazine, and N,N'-bis(2,2,6,6-tetramethyl-4-piperidyl)-1,6-hexamethylenediamine with N-(2,2,6,6-tetramethyl-4-piperidyl)butylamine; poly[{6-(1,1,3,3-tetramethylbutyl)amino-1,3,5-triazine-2,4-diyl} {(2,2,6,6-tetramethyl-4-piperidyl)imino} hexamethylene {(2,2,6,6-tetramethyl-4-piperidyl)imino}]; tetrakis(1,2,2,6,6-pentamethyl-4-piperidyl)butane-1,2,3,4-tetracarboxylate; tetrakis(2,2,6,6-tetramethyl-4-piperidyl)butane-1,2,3,4-tetracarboxylate; a reaction product of 1,2,2,6,6-pentamethyl-4-piperidiol and β,β,β',β'-tetramethyl-2,4,8,10-tetraoxaspiro[5.5]undecane-3,9-diethanol; a reaction product of 2,2,6,6-tetramethyl-4-piperidiol and β,β,β',β'-tetramethyl-2,4,8,10-tetraoxaspiro[5.5]undecane-3,9-diethanol; bis(1-undecanoxy-2,2,6,6-tetramethylpiperidin-4-yl) carbonate; 1,2,2,6,6-pentamethyl-4-piperidyl methacrylate; and 2,2,6,6-tetramethyl-4-piperidyl methacrylate.

In particular, bis(1,2,2,6,6-pentamethyl-4-piperidyl) [[3,5-bis(1,1-dimethylethyl)-4-hydroxyphenyl]methyl]butylmalonate; a polycondensate of dibutylamine, 1,3,5-triazine, and N,N'-bis(2,2,6,6-tetramethyl-4-piperidyl)-1,6-hexamethylenediamine with N-(2,2,6,6-tetramethyl-4-piperidyl)butylamine; poly[{6-(1,1,3,3-tetramethylbutyl)amino-1,3,5-triazine-2,4-diyl} {(2,2,6,6-tetramethyl-4-piperidyl)imino } hexamethylene {(2,2,6,6-tetramethyl-4-piperidyl)imino}]; a reaction product of 1,2,2,6,6-pentamethyl-4-piperidiol and β,β,β',β'-tetramethyl-2,4,8,10-tetraoxaspiro[5.5]undecane-3,9-diethanol; and a reaction product of 2,2,6,6-tetramethyl-4-piperidiol and β,β,β',β'-tetramethyl-2,4,8,10-tetraoxaspiro[5.5]undecane-3,9-diethanol, which include three or more cyclic structures, are preferable as the hindered amine light stabilizer.

Although the content of the hindered amine light stabilizer may be any amount with which an effect of improving light stability is obtained, an excessive content may lead to problems such as bleed-out during processing. Accordingly, the content of the hindered amine light stabilizer relative to 100 mass% of the methacrylic resin is preferably 5 mass% or less, more preferably 3 mass% or less, even more preferably 1 mass% or less, further preferably 0.8 mass% or less, even further preferably 0.01 mass% to 0.8 mass%, and particularly preferably 0.01 mass% to 0.5 mass%.

### --Ultraviolet absorber--

The methacrylic resin composition that is contained in the light guide of the present embodiment can contain an ultraviolet absorber.

Although no specific limitations are placed on ultraviolet absorbers that can be used, an ultraviolet absorber having a maximum absorption wavelength at 280 nm to 380 nm is preferable, and examples thereof include benzotriazole compounds, benzotriazine compounds, benzophenone compounds, oxybenzophenone compounds, benzoate compounds, phenolic compounds, oxazole compounds, cyanoacrylate compounds, and benzoxazinone compounds.

One of these ultraviolet absorbers may be used individually, or two or more of these ultraviolet absorbers may be used together.

In particular, the ultraviolet absorber is preferably a benzotriazine compound or benzotriazole compound having a molecular weight of 400 or more from a viewpoint of resin compatibility and volatility during heating, and is particularly preferably a benzotriazine compound from a viewpoint of inhibiting decomposition of the ultraviolet absorber itself under heating during extrusion.

Although no specific limitations are placed on the content of the ultraviolet absorber so long as it is an amount that does not impair heat resistance, wet heat resistance, thermal stability, and moldability and with which the effects according to the present disclosure are displayed, the content of the ultraviolet absorber relative to 100 parts by mass of the methacrylic resin is preferably 0.1 parts by mass to 5 parts by mass, preferably 0.2 parts by mass to 4 parts by mass, more preferably 0.25 parts by mass to 3 parts by mass, and even more preferably 0.3 parts by mass to 3 parts by mass. A content that is within any of these ranges provides an excellent balance of ultraviolet absorption performance, moldability, and so forth.

### --Mold release agent--

The methacrylic resin composition that is contained in the light guide of the present embodiment can contain a mold release agent. Examples of the mold release agent include, but are not limited to, fatty acid esters, fatty acid amides, fatty acid metal salts, hydrocarbon-based lubricants, alcohol-based lubricants, polyalkylene glycols, carboxylic acid esters, and paraffinic mineral oils of hydrocarbons.

One of these mold release agents may be used individually, or two or more of these mold release agents may be used together.

Examples of fatty acid esters that can be used as the mold release agent include conventional fatty acid esters that are commonly known without any specific limitations.

Examples of fatty acid esters that can be used include ester compounds of a fatty acid having 12 to 32 carbon atoms such as lauric acid, palmitic acid, heptadecanoic acid, stearic acid, oleic acid, arachidic acid, or behenic acid with a monohydric aliphatic alcohol such as palmityl alcohol, stearyl alcohol, or behenyl alcohol or a polyhydric aliphatic alcohol such as glycerin, pentaerythritol, dipentaerythritol, or sorbitan; and complex ester compounds of a fatty acid, a polybasic organic acid, and a monohydric aliphatic alcohol or polyhydric aliphatic alcohol.

Examples of such fatty acid esters include cetyl palmitate, butyl stearate, stearyl stearate, stearyl citrate, glycerin monocaprylate, glycerin monocaprate, glycerin monolaurate, glycerin monopalmitate, glycerin dipalmitate, glycerin monostearate, glycerin distearate, glycerin tristearate, glycerin monooleate, glycerin dioleate, glycerin trioleate, glycerin monolinoleate, glycerin monobehenate, glycerin mono-12-hydroxystearate, glycerin di-12-hydroxystearate, glycerin tri-12-hydroxystearate, glycerin diacetomonostearate, glycerin citric acid fatty acid ester, pentaerythritol adipic acid stearic acid ester, montanic acid partially saponified ester, pentaerythritol tetrastearate, dipentaerythritol hexastearate, and sorbitan tristearate.

One of these fatty acid esters can be used individually, or two or more of these fatty acid esters can be used in combination.

Examples of commercially available products include the RIKEMAL series, POEM series, RIKESTER series, and RIKEMASTER series produced by Riken Vitamin Co., Ltd., and the EXCEL series, RHEODOL series, EXCEPARL series, and COCONAD series produced by Kao Corporation. More specific examples include RIKEMAL S-100, RIKEMAL H-100, POEM V-100, RIKEMAL B-100, RIKEMAL HC-100, RIKEMAL S-200, POEM B-200, RIKESTER EW-200, RIKESTER EW-400, EXCEL S-95, and RHEODOL MS-50.

Although the content of the mold release agent may be any amount with which the effect as a mold release agent is obtained, an excessive content may lead to problems such as bleed-out during processing and poor extrusion caused by screw slipping. Accordingly, the content of the mold release agent relative to 100 parts by mass of the methacrylic resin is preferably 5 parts by mass or less, more preferably 3 parts by mass or less, even more preferably 1 part by mass or less, further preferably 0.8 parts by mass or less, even further preferably 0.01 parts by mass to 0.8 parts by mass, and particularly preferably 0.01 parts by mass to 0.5 parts by mass. Addition in an amount that is within any of the ranges set forth above tends to suppress reduction of transparency caused by addition of the mold release agent and also inhibit the occurrence of demolding defects in injection molding.

### --Other thermoplastic resins--

The methacrylic resin composition of the present embodiment can contain a thermoplastic resin other than the methacrylic resin with the aim of adjusting birefringence or improving flexibility without impairing the objects of the present disclosure.

Examples of other thermoplastic resins include polyacrylates such as polybutyl acrylate; styrenic polymers such as polystyrene, styrene-methyl methacrylate copolymer, styrene-butyl acrylate copolymer, styrene-acrylonitrile copolymer, and acrylonitrile-butadiene-styrene block copolymer; acrylic rubber particles having a three- or four-layer structure such as described in JP S59-202213 A, JP S63-27516 A, JP S51-129449 A, or JP S52-56150 A, for example; rubbery polymers disclosed in JP S60-17406 B2 and JP H8-245854 A; and methacrylic rubber-containing graft copolymer particles obtained by multi-step polymerization described in WO 2014/002491 A1.

Of these other thermoplastic resins, a styrene-acrylonitrile copolymer or rubber-containing graft copolymer particles having a grafted portion in a surface layer thereof with a composition that is compatible with a methacrylic resin including a structural unit having a cyclic structure in a main chain is preferable from a viewpoint of obtaining good optical properties and mechanical properties.

The average particle diameter of acrylic rubber particles, methacrylic rubber-containing graft copolymer particles, or a rubbery polymer such as described above is preferably 0.03 µm to 1 µm, and more preferably 0.05 µm to 0.5 µm from a viewpoint of enhancing impact strength, optical properties, and so forth of the light guide of the present embodiment.

The content of other thermoplastic resins is preferably 0 parts by mass to 50 parts by mass, and more preferably 0 parts by mass to 25 parts by mass when the methacrylic resin is taken to be 100 parts by mass.

### (Method of producing resin light guide for display)

A method of producing a resin light guide for a display of the present embodiment is a method of producing a resin light guide for a display through injection compression molding of a thermoplastic resin composition, the method comprising a resin filling step and a compression step, wherein
a temperature from a nozzle tip to a middle of an injection molding machine cylinder is set as a temperature that is 120°C to 180°C higher than a glass-transition temperature (Tg) of the thermoplastic resin composition and a mold temperature is set within a range of (Tg - 80)°C to (Tg - 35)°C relative to the glass-transition temperature (Tg) of the thermoplastic resin composition, and
each condition among an injection rate and a filling time in the resin filling step, a compression distance, a compression time, and a compression pressure in the compression step, a compression delay time set between the resin filling step and the compression step, and a cooling time is adjusted such as to satisfy (1) and (2), indicated below.
   (1) An absolute value of in-plane retardation of the resin light guide for a display is 10 nm or less.
   (2) A PV value of an effective area surface that guides image light in the resin light guide for a display is 100 µm or less.

Through the production method described above, it is possible to produce a resin light guide for a display having good external appearance and image quality.

The resin light guide for a display of the present embodiment can be produced through injection compression molding of the thermoplastic resin composition described above using an injection molding machine. In the method of producing a resin light guide for a display of the present embodiment, a temperature that is 120°C to 180°C higher than the glass-transition temperature (Tg) of the used thermoplastic resin composition is set as a temperature setting from a nozzle tip to the center of an injection molding machine cylinder during production of a light guide using an injection molding machine. This enables molding in a state in which there is sufficient flow of molten resin and in which degradation due to thermal decomposition of the resin is suppressed. Thermal decomposition of the resin not only adversely affects color tone, transmittance, and haze, but also causes the formation of gas during injection molding. The formed gas takes up space inside of the mold, and gas that has been forced in during resin filling is not expelled and impedes filling of resin, resulting in a poorer mold transfer rate. The temperature from the nozzle tip to the center of the injection molding machine cylinder is more preferably a temperature that is 130°C to 170°C higher than the glass-transition temperature (Tg) of the used thermoplastic resin composition.

The mold temperature during injection compression molding of the light guide of the present embodiment is set within a range of (Tg - 80)°C to (Tg - 35)°C relative to the glass-transition temperature (Tg) of the used thermoplastic resin composition. The mold temperature is more preferably (Tg - 75)°C to (Tg - 40)°C, and even more preferably (Tg - 70)°C to (Tg - 45)°C. By setting the mold temperature within any of the ranges set forth above, it is possible to control the degree of orientation of the thermoplastic resin composition and reduce birefringence, and it is also possible to inhibit warping and obtain a light guide having good surface accuracy. A mold temperature of lower than (Tg - 80)°C tends to increase the degree of orientation and increase birefringence. This also reduces fluidity of the resin inside of the mold, and thus tends to result in non-uniformity of thickness and deterioration of surface accuracy of the light guide. On the other hand, a mold temperature of higher than (Tg - 35)°C causes warping of the light guide and deterioration of surface accuracy. Therefore, the mold temperature is preferably set within any of the ranges set forth above.

Note that the thermoplastic resin composition in the method of producing a resin light guide for a display is the same as the thermoplastic resin composition in the preceding "Resin light guide for display" section and that the description in the "Resin light guide for display" section is also applicable here.

The method of producing a resin light guide for a display of the present embodiment includes a resin filling step and a compression step. Moreover, in the method of producing a resin light guide for a display of the present embodiment, each condition among an injection rate and a filling time in the resin filling step, a compression distance, a compression time, and a compression pressure in the compression step, a compression delay time set between the resin filling step and the compression step, and a cooling time is adjusted such as to satisfy (1) and (2), indicated below.
(1) An absolute value of in-plane retardation of the resin light guide for a display is 10 nm or less.
(2) A PV value of an effective area surface that guides image light in the resin light guide for a display is 100 µm or less.

The resin filling step is a step of filling a resin into a mold, and the compression step is a step of clamping the mold and compressing after filling of the resin into the mold.

Methods of adjustment for satisfying (1) and (2) are described below.

Although the cooling time in injection compression molding can be set as appropriate, it is preferable to set as long a cooling time as possible. Slow cooling tends to reduce birefringence by relieving strain arising in molding through an annealing effect.

An annealing step may be performed in production of the light guide of the present embodiment in order to relieve residual stress arising during injection compression molding and reduce birefringence of the light guide. The temperature during annealing, as based on the glass-transition temperature (Tg) of the resin composition, is preferably within a range of (Tg - 50)°C to Tg, and more preferably within a range of (Tg - 30)°C to (Tg - 10)°C. An annealing temperature that is within any of the ranges set forth above makes it possible to remove residual stress without deformation of shape of the light guide.

In the resin filling step, the injection rate during injection compression molding of the light guide of the present embodiment can be selected as appropriate depending on the thickness and dimensions of the resin light guide that is to be obtained and can, for example, be selected as appropriate from a range of 10 mm/s to 1,000 mm/s. There is a correlation between the injection rate and the degree of orientation in terms that increasing the injection rate tends to increase the degree of orientation, whereas reducing the injection rate tends to reduce the degree of orientation.

Moreover, the filling time in the resin filling step can be set as appropriate.

The injection pressure during injection compression molding of the light guide of the present embodiment may be set as appropriate such that the target injection rate is achieved.

In the compression step, a compression pressure of 100 kN to 5,000 kN is preferable for satisfying (1) and (2).

In a case in which the light guide of the present embodiment has micro-protuberance(s) in a section of a surface or at a plurality of sites, production may be performed by heat-and-cool molding in which the mold is preheated to the glass-transition temperature of the used resin or higher prior to filling of the resin into the mold, the resin is filled with the mold in a heated state, and cooling is subsequently performed in order to achieve good micro-protuberance transferability.

In a situation in which heat-and-cool molding is adopted in production of the light guide of the present embodiment, the method by which the mold is heated may be any method without any specific limitations. Examples of such methods include a method in which a water or oil channel is provided inside of the mold and in which the mold temperature is adjusted to Tg of the methacrylic resin composition or higher through a medium such as water or oil, a method in which a heater is embedded inside of the mold and heats the mold, a method in which an electrical conduction layer through which current can be passed is provided at the surface of the mold and in which current is passed to generate heat and cause heating, a method in which an induction heating device is used to perform heating from outside or inside of the mold, and a method in which heating is performed through radiation by far infrared radiation from a halogen lamp or ceramic heater outside of the mold.

Moreover, the mold may be cooled by any method without any specific limitations. Examples of such methods include a method in which a water or oil channel is provided inside of the mold and in which cooling is performed through a medium such as water or oil.

In production of the light guide of the present embodiment by injection compression molding, the compression distance in the compression step is preferably set as 100% to 300% of the thickness of the light guide, more preferably 120% to 250% of the thickness of the light guide, and even more preferably 150% to 200% of the thickness of the light guide. A compression distance of less than 100% tends to make resin filling difficult and result in underfilling of the light guide. On the other hand, a compression distance of more than 300% tends to cause non-uniformity of thickness of the light guide and increase the PV value of the light guide. Therefore, the compression distance is preferably set as 100% to 300% of the thickness of the light guide.

In production of the light guide of the present embodiment by injection compression molding, a compression delay time is preferably set between the resin filling step and the compression step. The compression delay time is preferably set as 80% to 150% of the injection time, more preferably 90% to 120% of the injection time, and even more preferably 100% to 110% of the injection time. A compression delay time that is less than 80% of the injection time makes it difficult to control the thickness of the light guide because resin that is being injected is subjected to pressure from both the compression direction and the injection direction, and flow of the resin is destabilized. As a result, non-uniformity of thickness of the light guide tends to arise, and the PV value of the light guide tends to increase. On the other hand, a compression delay time that is more than 150% of the injection time tends to increase non-uniformity of thickness of the light guide and increase the PV value of the light guide because there is a long time from injection until compression, and the resin hardens and has insufficient fluidity. Therefore, the compression delay time is preferably set within any of the ranges set forth above.

The surface of the light guide of the present embodiment can be further subjected to surface functionalization treatment such as hard coating treatment, anti-reflection treatment, transparent conductive treatment, electromagnetic shielding treatment, or gas barrier treatment. The thicknesses of these layers are not specifically limited but are normally within a range of 0.01 µm to 10 µm.

A hard coating layer provided at the surface of the light guide may be formed by, for example, adopting a conventional application method that is commonly known to apply a coating liquid having a silicone curable resin, an organic polymer-composited inorganic fine particle-containing curable resin, or an acrylate such as urethane acrylate, epoxy acrylate, or a polyfunctional acrylate and a photopolymerization initiator dissolved or dispersed in an organic solvent onto a film or sheet obtained using the resin composition of the present embodiment, and then drying the coating liquid and causing curing by light. In order to improve adhesiveness, it is possible to adopt a method in which an easy-adhesion layer containing inorganic fine particles in the composition thereof, a primer layer, an anchor layer, or the like is provided in advance, prior to application of the hard coating layer, and in which the hard coating layer is subsequently formed. An anti-glare layer provided at the surface of the light guide may be formed by forming an ink using fine particles of silica, melamine resin, acrylic resin, or the like, applying the ink onto another functional layer by a conventional application method that is commonly known, and causing curing by heat or light. An anti-reflection layer provided at the surface of the light guide may be a layer composed of a thin film of an inorganic material such as a metal oxide, fluoride, silicide, boride, nitride, or sulfide or a single layer or stack of multiple layers of resins having different refractive indices such as an acrylic resin and a fluororesin, for example. Alternatively, a stack of thin layers containing composite fine particles of an inorganic compound and an organic compound can also be used.

### (Image display device)

An image display device of the present embodiment preferably includes the resin light guide for a display of the present embodiment.

The image display device has good image quality as a result of including the light guide of the present embodiment.

The image display device of the present embodiment can be produced by a conventional method that is commonly known. For example, the image display device of the present embodiment can be produced by a method described in WO 2017/047528 A1.

### EXAMPLES

The following provides a description through specific examples and comparative examples. However, the present disclosure is not limited to the following examples.

### [Raw materials]

Raw materials used in the subsequently described examples and comparative examples were as follows.

### [[Monomers forming methacrylic resins]]

- Methyl methacrylate (MMA): produced by Asahi Kasei Corporation
- N-Phenylmaleimide (PMI): produced by Nippon Shokubai Co., Ltd.
- N-Cyclohexylmaleimide (CMI): produced by Nippon Shokubai Co., Ltd.
- Styrene: produced by FUJIFILM Wako Pure Chemical Corporation
- Methyl 2-(hydroxymethyl)acrylate (MHMA): produced by Combi-Blocks Inc.

### [[Organic solvents]]

- Meta-xylene (mXy): produced by Mitsubishi Gas Chemical Company, Ltd.
- Methyl isobutyrate: produced by Kanto Chemical Co., Inc.
- Toluene: produced by FUJIFILM Wako Pure Chemical Corporation

### [[Polymerization initiators]]

- 1,1-Di(t-butylperoxy)cyclohexane: produced by NOF Corporation
- t-Amyl peroxy-2-ethylhexanoate: Luperox 575 produced by Arkema Yoshitomi, Ltd.
- t-Amyl peroxyisononanoate: produced by Arkema Yoshitomi, Ltd.

### [[Chain transfer agents]]

- n-Octyl mercaptan: produced by Chevron Phillips Chemical LLC.
- n-Dodecyl mercaptan: produced by FUJIFILM Wako Pure Chemical Corporation

### [[Additives]]

- Pentaerythritol tetrakis[3-(3,5-di-tert-butyl-4-hydroxyphenyl)propionate]: Irganox 1010 produced by BASF Corporation
- Tris(2,4-di-t-butylphenyl) phosphite: Irgafos 168 produced by BASF Corporation
- RIKEMAL H-100: produced by Riken Vitamin Co., Ltd.
- Stearyl phosphate/distearyl phosphate mixture: produced by Sakai Chemical Industry Co., Ltd.
- Monomethylamine: produced by Mitsubishi Gas Chemical Company, Ltd.

### (Evaluation of characteristics of methacrylic resin compositions)

The following describes measurement methods of characteristics of methacrylic resin compositions.

### (1) Measurement of weight-average molecular weight (Mw)

The weight-average molecular weight (Mw) of a methacrylic resin composition was measured using the following device and conditions.
• Measurement device: Gel permeation chromatograph (HLC-8320GPC) produced by Tosoh Corporation
• Measurement conditions
Column: TSKguardcolumn SuperH-H × 1, TSKgel SuperHM-M × 2, and TSKgel SuperH2500 × 1 connected in order in series
Column temperature: 40°C
Eluent solvent: Tetrahydrofuran at flow rate of 0.6 mL/min with 0.1 g/L of 2,6-di-t-butyl-4-methylphenol (BHT) added as internal standard
Detector: RI (differential refraction) detector
Detection sensitivity: 3.0 mV/min
Sample: Solution of 0.02 g of resin light guide in 20 mL of tetrahydrofuran
Injection volume: 10 µL
Standard samples for calibration curve preparation: Following 10 types of polymethyl methacrylate (PMMA Calibration Kit M-M-10 produced by Polymer Laboratories Ltd.) of differing molecular weight, each having a known monodisperse weight peak molecular weight
Weight peak molecular weight (Mp)

| | |
|---|---|
| Standard sample 1 | 1,916,000 |
| Standard sample 2 | 625,500 |
| Standard sample 3 | 298,900 |
| Standard sample 4 | 138,600 |
| Standard sample 5 | 60,150 |
| Standard sample 6 | 27,600 |
| Standard sample 7 | 10,290 |
| Standard sample 8 | 5,000 |
| Standard sample 9 | 2,810 |
| Standard sample 10 | 850 |

The RI detection intensity relative to the elution time of the resin light guide was measured under the conditions indicated above.

The weight-average molecular weight (Mw) of the resin light guide was determined based on a calibration curve obtained through measurement of the standard samples for calibration curve preparation described above.

### (2) Measurement of photoelastic coefficient

A methacrylic resin composition was made into a pressed film by a vacuum compression molding machine to obtain a measurement sample. As the specific sample production conditions, a vacuum compression molding machine (SFV-30 produced by Shinto Metal Industries Corporation) was used to perform 10 minutes of preheating at 260°C under vacuum (approximately 10 kPa) and subsequently compress the resin composition at 260°C and approximately 10 MPa for 5 minutes. After release of the vacuum and pressing pressure, the product was transferred to a compression molding machine for cooling and was subjected to cooling and solidification. The resultant pressed film was cured for at least 24 hours in a constant temperature and constant humidity chamber adjusted to a temperature of 23°C and a humidity of 60%, and then a test specimen for measurement (thickness: approximately 150 µm; width: 6 mm) was cut out therefrom.

The photoelastic coefficient C_{R} (Pa⁻¹) was measured using a birefringence measurement device that is described in detail in Polymer Engineering and Science 1999, 39, 2349-2357.

The film-shaped test specimen was set in a film tensing device (produced by Imoto Machinery Co., Ltd.) set up in the same manner in a constant temperature and constant humidity chamber such that the chuck separation was 50 mm. Next, a birefringence measurement device (RETS-100 produced by Otsuka Electronics Co., Ltd.) was arranged such that the laser light path of the device was positioned in a central portion of the film. The birefringence of the test specimen was measured while applying tensile stress with a strain rate of 50%/min (chuck separation: 50 mm; chuck movement speed: 5 mm/min).

The photoelastic coefficient (C_{R}) (Pa⁻¹) was calculated by making a least squares approximation to determine the gradient of a straight line for a relationship between the absolute value (|Δn|) of birefringence and the tensile stress (σ_{R}) determined by measurement. This calculation was performed using data in a tensile stress range of 2.5 MPa ≤ σ_{R} ≤ 10 MPa. ${C}_{R} = \left|Δn\right| / {σ}_{R}$ Note that the absolute value (|Δn|) of birefringence is a value indicated below. $\left|Δn\right| = \left|nx-ny\right|$ (nx: refractive index of tension direction; ny: refractive index of in-plane direction perpendicular to tension direction)

### (3) Measurement of glass-transition temperature

The glass-transition temperature of a methacrylic resin composition was measured in accordance with JIS K 7121.

A DSC curve was plotted using a differential scanning calorimeter (DSC 8000 produced by PerkinElmer Japan) under a nitrogen gas flow rate of 25 mL/min while heating the sample from room temperature (23°C) to 200°C at 10°C/min (primary heating), holding the sample at 200°C for 5 minutes to completely melt the sample, subsequently cooling the sample from 200°C to 40°C at 10°C/min, holding the sample at 40°C for 5 minutes, and then reheating the sample under the aforementioned heating conditions (secondary heating). An intersection point (midpoint glass-transition temperature) of a stair-shaped change section of the DSC curve during the secondary heating and a straight line that was equidistant in a vertical axis direction from each extrapolated baseline was measured as the glass-transition temperature (Tg) (°C).

### (4) Measurement of total luminous transmittance

The total luminous transmittance of a molded product of 3 mm in thickness was measured in accordance with the stipulations of JIS K 7361 using a turbidity meter COH7700 (produced by Nippon Denshoku Industries Co., Ltd.). The molded product was produced in an injection molding machine (SE180EV-A produced by Sumitomo Heavy Industries, Ltd.) with a mold size of 100 mm × 100 mm × 3 mm (thickness) using pellets that had been dried at 90°C for at least 12 hours.

### (5) Measurement of melt flow rate (MFR)

The melt flow rate of a methacrylic resin composition at a temperature of 230°C and a load of 37 N was measured under conditions in accordance with method A of JIS K 7210 using a melt indexer (produced by Toyo Seiki Seisaku-Sho, Ltd.).

### (Evaluation of light guides)

The following describes evaluation methods of light guides.

### (1) Measurement of in-plane retardation of light guide

A light guide was set on a measurement stage of a PA-300-L (produced by Photonic Lattice, Inc.), and an in-plane retardation distribution was measured at a wavelength of 520 nm. An average absolute value of in-plane retardation (Re) in the measurement area was determined and was taken to be a measurement value of retardation (nm).

A value of birefringence of 10 nm or less in terms of in-plane retardation is preferable as a range that tends not to adversely affect optical properties.

### (2) Evaluation of degree of orientation

The degree of orientation of a light guide surface was evaluated by polarized ATR under the following conditions.

### • Measurement conditions

Device: Fourier-transform infrared spectrophotometer (JASCO FT/IR-4100), spectrum resolution: 4 cm⁻¹
Measurement method: Polarized ATR (using polarized single-reflection ATR-PRO610P-S)
Infrared polarization direction: Parallel polarization relative to ATR crystal surface (measurement surface)
ATR crystal: Diamond
Cumulative number: 32

A polarized single-reflection ATR jig was used to irradiate a sample surface with parallel polarized light in proximity to a gate, in a central portion, and in proximity to a flow terminal of a light guide. MD measurement was performed with the polarization direction of infrared light and the resin flow direction aligned, and TD measurement was performed after rotation of the sample by 90°. In order to confirm data reproducibility, measurements were performed four times at the same position after separating the ATR crystal and the light guide each time. Note that MD is a longitudinal direction (resin flow direction) during molding of the light guide, whereas TD is a direction perpendicular to MD.

The peak intensity of methylene CH asymmetric in-plane bending vibration (rocking) 750 cm⁻¹ of MMA, which is sensitive to orientation, was determined from the obtained MD/TD spectrum, a ratio (750/896 cm⁻¹) thereof with the peak intensity at 896 cm⁻¹, which is insensitive to orientation, was used to correct for contact pressure (vertical axis), and the degree of orientation (orientation distribution function) <P₂> of MMA was determined by the following equation (i), which is described in Applied Optics, Vol. 54, Issue 4, pp. 779-788, 2015.
[Math. 1] $\left〈{P}_{2}\right〉 = \frac{{A}_{MD} - {A}_{TD}}{{A}_{MD} - 2 {A}_{TD}} ⋅ \frac{2 {cot}^{2} ψ + 2}{2 {cot}^{2} ψ - 1}$ (i) (In equation (i), A_{MD} represents absorbance with MD polarization, A₁₀ represents absorbance with TD polarization, and ψ represents an angle formed by the orientation of the transition dipole moment and the orientation axis.)

When determining the degree of orientation, the degree of orientation was calculated with ψ taken to be 17° according to the aforementioned literature.

Note that the peak intensity at 750 cm⁻¹ and the peak intensity at 896 cm⁻¹ were calculated using a two-point baseline method, peaks were calculated in the following ranges, and an average value of four measurements was used to evaluate the degree of orientation.

Intensity peak at 750 cm⁻¹: (left end) 781.029 cm⁻¹ to 724.139 cm⁻¹ (right end)

Intensity peak at 896 cm⁻¹: (left end) 904.451 cm⁻¹ to 879.381 cm⁻¹ (right end)

Note that in a case in which the peak width differs from this range, values of both ends of the peak can be adjusted as appropriate.

### (3) Evaluation of displayed image clarity

The clarity of a displayed image was evaluated as one indicator of image quality.

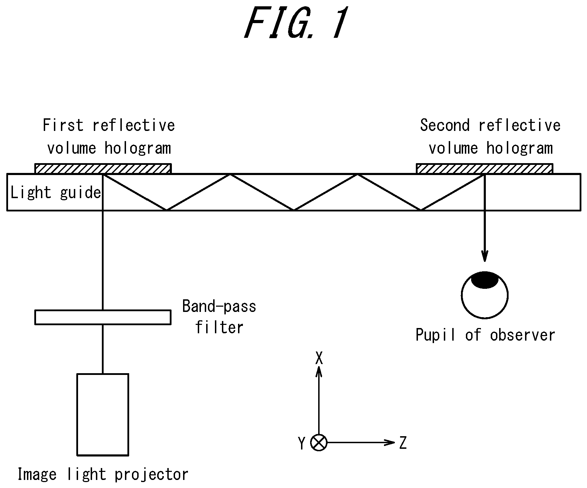

In an arrangement illustrated in FIG. 1, a light guide obtained in each example or comparative example was used, and reflective volume holographic diffraction gratings (first reflective volume hologram and second reflective volume hologram) were respectively adhered to surfaces opposite an entry section (entry surface) of image light and an exit section (exit surface) of displayed light so as to prepare an evaluation system such as illustrated in FIG. 1.

In FIG. 1, the system is formed through a combination of an image projector, a band-pass filter (optical filter transmitting only wavelengths of 615 nm to 645 nm), a light guide, a first reflective volume hologram (having a selective diffraction characteristic with respect to red wavelengths), and a second reflective volume hologram (having a selective diffraction characteristic with respect to red wavelengths). Light that has been emitted from the image projector enters the light guide, undergoes a change of direction through diffraction by the first reflective volume hologram, and is guided inside of the light guide by total internal reflection. The guided light reaches the second reflective volume hologram, undergoes a change of direction through diffraction, and then enters a pupil of an observer.

Note that in FIG. 1, the direction of travel of image light was set as the X-axis, and the light guide was set up such that the entry surface was a Y-Z plane.

A red monochromatic still image was projected from the image projector, and the clarity of an image observed at the position of the pupil of the observer was evaluated by the following evaluation standard.

### [Evaluation standard]

### Image clarity

A: Red color clearly reproduced without bleeding, blurring, or distortion of image
B: Image slightly unclear due to bleeding, blurring, and distortion, and non-uniformity of brightness or reduction of brightness confirmed
C: Image unclear due to bleeding, blurring, and distortion, unclear what is being projected, and non-uniformity of brightness or reduction of brightness confirmed

### (4) Measurement of polarization maintenance

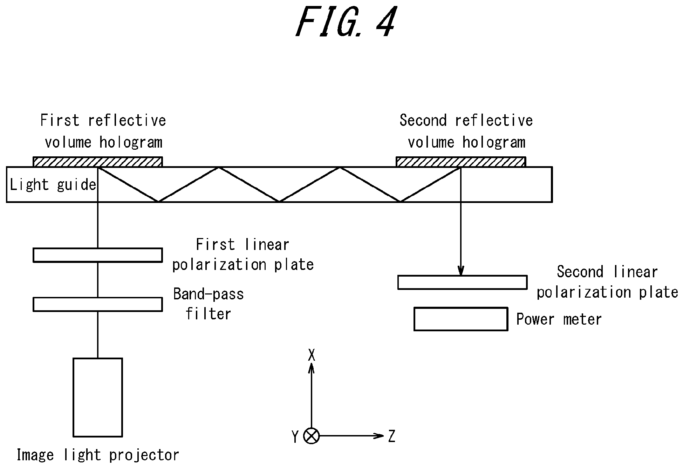

In an arrangement illustrated in FIG. 4, a light guide obtained in each example or comparative example was used, and reflective volume holographic diffraction gratings were respectively adhered to surfaces opposite an entry section (entry surface) of image light and an exit section (exit surface) of displayed light so as to prepare an evaluation system such as illustrated in FIG. 4.

In FIG. 4, the system is formed through a combination of an image projector that is a red laser light source, a band-pass filter (optical filter transmitting only wavelengths of 615 nm to 645 nm), a first linear polarization plate, a second linear polarization plate, a light guide, a first reflective volume hologram (having a selective diffraction characteristic with respect to red wavelengths), and a second reflective volume hologram (having a selective diffraction characteristic with respect to red wavelengths). Light that has been emitted from the image projector passes through the band-pass filter and the first linear polarization plate, enters the light guide, undergoes a change of direction through diffraction by the first reflective volume hologram, and is guided inside of the light guide by total internal reflection. The guided light reaches the second reflective volume hologram, undergoes a change of direction through diffraction, and then enters the second linear polarization plate and a power meter.

Note that in FIG. 4, the direction of travel of image light was set as the X-axis, and the light guide was set up such that the entry surface was a Y-Z plane.

Red monochromatic light from the red laser light source entered the light guide, and the amount of light extracted via the reflective volume holograms was measured by the power meter. The optical path length during this measurement was set as approximately 16 cm.

The amount of light measured with the second linear polarization plate in a parallel arrangement with the first linear polarization plate was taken to be Tp (parallel), the amount of light measured with the second linear polarization plate and the first linear polarization plate in a crossed arrangement was taken to be Tc (crossed), and polarization maintenance was calculated from a formula: Tp/(Tc + Tp). In FIG. 4, a state in which transmission axes of the second linear polarization plate and the first linear polarization plate are in parallel is a parallel arrangement, whereas a state in which the transmission axes of the second linear polarization plate and the first linear polarization plate are perpendicular is a crossed arrangement.

### (5) Observation of micro-protuberances

Using an atomic force microscope Dimension Icon (produced by Bruker), microgeometric measurement was performed with an AR-5T-type Si single crystal probe (tip aspect ratio 5/high aspect ratio height 2 µm), and the line width and height of micro-protuberances were determined.

### (6) PV value measurement of light guide

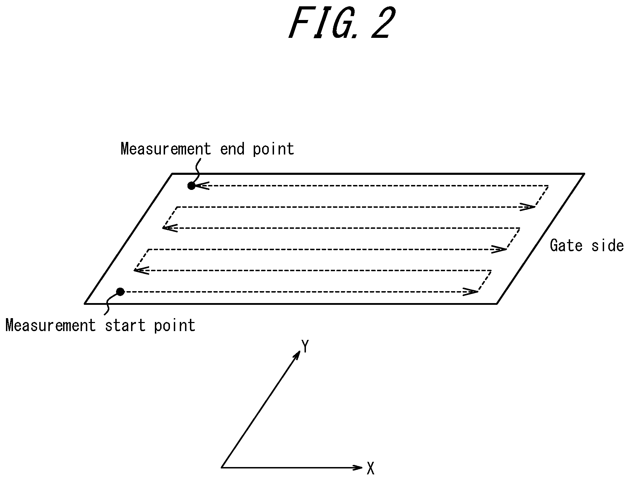

A Point Autofocus Probe 3D Measuring Instrument NH-3SP (produced by Mitaka Kohki Co., Ltd.) was used to perform measurement in an X direction and a Y direction by turning back inward from the perimeter of the light guide by a length corresponding to 1/4 of the Y-axis direction (transverse direction) length in an arrangement illustrated in FIG. 2. PV value measurement was performed for all surfaces that contribute to guiding image light, and the value of a surface having a largest PV value was taken to be a PV value of the light guide.

Measurement was performed with the measurement pitch in the X direction set as 1/1000 of a longest section of the light guide in the X-axis direction and the measurement pitch in the Y direction set as 1/10^{th} of a longest section of the light guide in the Y-axis direction. Note that in a case in which a site having diffractive functionality was present at the surface of the light guide, the PV value was determined by measuring the surface exclusive of that site.

A smaller PV value indicates that the light guide has higher flatness, has good external appearance with suppressed warping and non-uniformity of thickness, and has excellent image quality.

### (7) Thickness non-uniformity measurement of light guide

A flat surface section of a light guide was set facing downward on a surface plate, and a Digimatic Measuring Unit VL-50S (produced by Mitutoyo Corporation) was used to divide an area where the PV value described above was measured into 6 sections and to measure the thickness in each area. Measurement values of the areas at 6 locations were averaged, the difference with the design thickness was determined, and an absolute value thereof was taken to be a measurement value for non-uniformity of thickness.

Moreover, in a case in which a site having diffractive functionality was present at the surface of the light guide, an area of the surface excluding this site was divided into 6 sections, and the thickness of each area was measured in order to measure the non-uniformity of thickness.

### (8) Presence of cracks

The presence of cracks in a produced light guide was inspected as one indicator of the quality of external appearance. The produced light guide was visually inspected, and the presence of cracks was evaluated.

### (Production of methacrylic resin compositions)

### -Synthesis Example 1 [Methacrylic resin composition A]-

A mixed monomer solution was obtained by measuring out 318.7 kg of methyl methacrylate (hereinafter, denoted as MMA), 35.5 g of N-phenylmaleimide (hereinafter, denoted as PMI), 63.7 kg of N-cyclohexylmaleimide (hereinafter, denoted as CMI), 0.341 kg of n-octyl mercaptan as a chain transfer agent, and 225.1 kg of meta-xylene (hereinafter, denoted as mXy), adding these materials into a 1.25 m³ reactor equipped with a stirring blade and a temperature controller functioning through use of a jacket, and then stirring these materials.

Next, 116.9 kg of mXy was measured out and was added into a first tank to prepare a supplemental solvent.

In addition, 104.5 kg of MMA and 85.5 kg of mXy were measured out in a second tank and were stirred to obtain a supplemental MMA solution.

Liquid contained in the reactor was subjected to 1 hour of nitrogen bubbling at a rate of 30 L/min, and liquids contained in the first tank and the second tank were also each subjected to 30 minutes of nitrogen bubbling at a rate of 10 L/min so as to remove dissolved oxygen.

Thereafter, the temperature of the solution in the reactor was raised to 125°C by blowing steam into the jacket, and the solution was stirred at 50 rpm while adding a polymerization initiator solution of 0.457 kg of 1,1-di(t-butylperoxy)cyclohexane dissolved in 2.67 kg of mXy at a rate of 1 kg/hr to initiate polymerization. Note that the temperature of the solution in the reactor was controlled to 125 ± 2°C through the jacket during polymerization. At 30 minutes after the start of polymerization, the addition rate of the polymerization initiator solution was reduced to 0.25 kg/hr, and mXy was further added from the first tank for 3.5 hours at 29.24 kg/hr.

Next, at 4 hours after the start of polymerization, the addition rate of the polymerization initiator solution was raised to 0.75 kg/hr, and the supplemental MMA solution was added from the second tank for 2 hours at 95 kg/hr.

Moreover, the addition rate of the polymerization initiator solution was reduced to 0.25 kg/hr at 6 hours after the start of polymerization, and addition was stopped at 7 hours after the start of polymerization.

A polymerization solution containing a methacrylic resin was obtained once 8 hours had passed from the start of polymerization. With respect to this solution, 0.261 kg of Irganox 1010 and 0.784 kg of Irgafos 168 as antioxidants, and 0.784 kg of RIKEMAL H-100 as a mold release agent were added.

Next, the resultant polymerization solution was fed into a concentrating device comprising a vaporization tank and a tubular heat exchanger that had been pre-heated to 250°C and was subjected to devolatilization. The condition of degree of vacuum in the vaporization tank was 10 Torr to 15 Torr. The resin flowing down the vaporization tank was discharged with a screw pump, extruded through a strand die, cooled with water, and subsequently pelletized to obtain a methacrylic resin composition A including N-substituted maleimide structural units.

The obtained methacrylic resin composition A had a Tg of 133°C, a weight-average molecular weight of 130,000, and an MFR of 1.2 g/10 min.

The composition of the methacrylic resin composition A determined by NMR was 81 mass% of MMA units, 7 mass% of PMI units, and 12 mass% of CMI units.

### -Synthesis Example 2 [Methacrylic resin composition B]-

A monomer composition containing 60.000 mol% of methyl methacrylate, 39.998 mol% of styrene, and 0.002 mol% of t-amyl peroxy-2-ethylhexanoate as a polymerization initiator was continuously supplied to a 10 L fully mixed tank equipped with a helical ribbon impeller at 1 kg/hr, and continuous polymerization was performed with an average residence time of 2.5 hours at a polymerization temperature of 150°C. The liquid level in the polymerization tank was maintained constant by continuous withdrawal from the bottom, and the withdrawn material was fed into a concentrating device comprising a tubular heat exchanger and a vaporization tank and was subjected to devolatilization. The condition of degree of vacuum in the vaporization tank was 10 Torr to 15 Torr. The resin flowing down the vaporization tank was discharged with a screw pump, extruded through a strand die, cooled with water, subsequently pelletized, and then introduced into a solvent removal device to obtain a pelletized methyl methacrylate-styrene copolymer. The composition of the methyl methacrylate-styrene copolymer determined by NMR was 60 mass% of MMA units and 40 mass% of styrene units.

This copolymer was dissolved in methyl isobutyrate to prepare a 10 mass% methyl isobutyrate solution. A 1,000 mL autoclave was charged with 500 parts by mass of the 10 mass% methyl isobutyrate solution of the copolymer and 1 part by mass of 10 mass% Pd/C (produced by N.E. Chemcat Corporation) as a hydrogenation catalyst. Aromatic double bonds of the styrene portion of the copolymer were hydrogenated by maintaining a hydrogen pressure of 9 MPa and temperature of 200°C for 15 hours. The hydrogenation catalyst was removed using a filter, 0.05 parts by mass of RIKEMAL H-100 was added and mixed into the polymer solution, and then the polymer solution was fed into a concentrating device comprising a tubular heat exchanger and a vaporization tank and was subjected to devolatilization. The condition of degree of vacuum in the vaporization tank was 10 Torr to 15 Torr. The resin flowing down the vaporization tank was discharged with a gear pump, extruded from a strand die, cooled with water, and subsequently pelletized to obtain a methacrylic resin composition B having a hydrogenation rate of 96%.

The obtained methacrylic resin composition B had a Tg of 118°C, a weight-average molecular weight of 170,000, and an MFR of 6.9 g/10 min.

### -Synthesis Example 3 [Methacrylic resin composition C]-

A 200 L reaction vessel equipped with a stirring device having a paddle blade, a temperature sensor, a condenser, and a nitrogen feeding tube was charged with 41.0 kg of methyl methacrylate (MMA), 10.0 kg of methyl 2-(hydroxymethyl)acrylate (produced by Combi-Blocks Inc.), and 50.0 kg of toluene to produce a raw material solution. The raw material solution was heated to a liquid temperature of 107°C under stirring while passing nitrogen therethrough.

An initiator feed liquid was separately produced by mixing 0.05 kg of 1,1-di(t-butylperoxy)cyclohexane and 0.36 kg of toluene.

Once the raw material solution temperature reached 107°C, feeding of the initiator feed liquid as in (1) to (6) of the following profile was started.
(1) 0.0 hr to 0.5 hr: Feed rate of 0.20 kg/hr
(2) 0.5 hr to 1.0 hr: Feed rate of 0.10 kg/hr
(3) 1.0 hr to 2.0 hr: Feed rate of 0.08 kg/hr
(4) 2.0 hr to 3.0 hr: Feed rate of 0.07 kg/hr
(5) 3.0 hr to 4.0 hr: Feed rate of 0.028 kg/hr
(6) 4.0 hr to 7.0 hr: Feed rate of 0.026 kg/hr

After the initiator had been fed over a total of 7 hours, the reaction was continued for a further 1 hour, and the polymerization reaction was ended after a total of 8 hours.

The internal temperature in the polymerization reaction was controlled to 107 ± 2°C. Next, 51 g of a stearyl phosphate/distearyl phosphate mixture was added to the resultant polymer solution, and a cyclocondensation reaction was carried out for 5 hours under reflux (approximately 90°C to 110°C).

A ϕ42 mm twin-screw devolatilization extruder having four front vents and one rear vent was used to perform a cyclocondensation reaction and devolatilization treatment of the resultant polymerization solution at 140 rpm and 10 kg/hr, in terms of amount of resin, to thereby obtain a methacrylic resin composition C. The obtained methacrylic resin composition C had a Tg of 129°C, a weight-average molecular weight of 130,000, and an MFR of 7.1 g/10 min.

The composition of the methacrylic resin composition C determined by NMR was 82 mass% of MMA units, 17 mass% of lactone ring structural units, and 1 mass% of MHMA units.

### -Synthesis Example 4 [Methacrylic resin composition D]-

A 1.25 m³ reaction vessel equipped with a stirring device having a paddle blade, a temperature sensor, a condenser, and a nitrogen feeding tube was charged with 550 kg of methyl methacrylate (MMA), 450 kg of meta-xylene, and 0.18 g of n-octyl mercaptan, and these materials were dissolved to produce a raw material solution. The raw material solution was heated to 125°C under stirring while passing nitrogen therethrough.

An initiator feed liquid was separately produced by mixing 0.23 kg of 1,1-di(t-butylperoxy)cyclohexane and 1.82 kg of meta-xylene. Once the raw material solution reached 127°C, feeding of the initiator feed liquid as in (1) to (6) of the following profile was started.
(1) 0.0 hr to 0.5 hr: Feed rate of 1.00 kg/hr
(2) 0.5 hr to 1.0 hr: Feed rate of 0.50 kg/hr
(3) 1.0 hr to 2.0 hr: Feed rate of 0.42 kg/hr
(4) 2.0 hr to 3.0 hr: Feed rate of 0.35 kg/hr
(5) 3.0 hr to 4.0 hr: Feed rate of 0.20 kg/hr
(6) 4.0 hr to 7.0 hr: Feed rate of 0.13 kg/hr

After the initiator had been fed over a total of 7 hours, the reaction was continued for a further 1 hour, and the polymerization reaction was ended after a total of 8 hours.

A ϕ42 mm devolatilization extruder having four fore vents and one rear vent was used to perform devolatilization treatment of the resultant polymerization liquid at 140 rpm and 10 kg/hr, in terms of amount of resin, and to obtain resin pellets.

A side feeder was used to introduce a 40 mass% monomethylamine aqueous solution into a vented twin-screw extruder at a barrel temperature of 250°C in an amount of 5 parts by mass of monomethylamine relative to 100 parts by mass of the obtained resin pellets, and an imidization reaction was performed. Excess methylamine and water were removed as appropriate from a vent port included at a downstream side of the extruder, and a methacrylic resin composition D was obtained. The obtained methacrylic resin composition D had a Tg of 122°C, a weight-average molecular weight of 130,000, and an MFR of 1.3 g/10 min. The composition of the methacrylic resin composition D determined by NMR was 95 mass% of MMA units and 5 mass% of glutarimide-based structural units.

### -Synthesis Example 5 [Methacrylic resin composition E]-

A methacrylic resin composition E was obtained by performing polymerization in the same way as in Synthesis Example 1 with the exception that the amount of n-octyl mercaptan as a chain transfer agent was set as 0.708 kg.

The obtained methacrylic resin composition E had a Tg of 134°C, a weight-average molecular weight of 90,000, and an MFR of 2.8 g/10 min.

The composition of the methacrylic resin composition E determined by NMR was 81 mass% of MMA units, 7 mass% of PMI units, and 12 mass% of CMI units.

### -Synthesis Example 6 [Methacrylic resin composition F]-

A 1.25 m³ reaction vessel equipped with a stirring device having a paddle blade, a temperature sensor, a condenser, and a nitrogen feeding tube was charged with 445 kg of methyl methacrylate (MMA), 44 kg of N-phenylmaleimide (PMI), 61 kg of N-cyclohexylmaleimide (CMI), 450.0 kg of meta-xylene, and 100 mass ppm of n-octyl mercaptan relative to 100 parts by mass of the total amount of all monomers, and these materials were dissolved to produce a raw material solution. The raw material solution was heated to 125°C under stirring while passing nitrogen therethrough.

An initiator feed liquid was separately produced by mixing 0.23 kg of 1,1-di(t-butylperoxy)cyclohexane and 1.82 kg of meta-xylene.

Once the raw material solution reached 127°C, feeding (addition) of the initiator feed liquid (polymerization initiator solution) as in (1) to (6) of the following profile was started.
(1) 0.0 hr to 0.5 hr: Feed rate of 1.00 kg/hr
(2) 0.5 hr to 1.0 hr: Feed rate of 0.50 kg/hr
(3) 1.0 hr to 2.0 hr: Feed rate of 0.42 kg/hr
(4) 2.0 hr to 3.0 hr: Feed rate of 0.35 kg/hr
(5) 3.0 hr to 4.0 hr: Feed rate of 0.14 kg/hr
(6) 4.0 hr to 7.0 hr: Feed rate of 0.13 kg/hr

After the initiator had been fed over a total of 7 hours, the reaction was continued for a further 1 hour, and the polymerization reaction was performed up to 8 hours from the start of addition of the initiator to obtain a methacrylic resin composition F. The obtained methacrylic resin composition F had a Tg of 135°C, a weight-average molecular weight of 180,000, and an MFR of 0.5 g/10 min.

The composition of the methacrylic resin composition F determined by NMR was 81 mass% of MMA units, 8 mass% of PMI units, and 11 mass% of CMI units.

### -Synthesis Example 7 [Cycloolefin resin composition G]-

First, VO(OC₂H₅)Cl₂ was diluted with cyclohexane to prepare a vanadium catalyst having a vanadium concentration of 6.7 mmol/L-cyclohexane. Ethylaluminum sesquichloride (Al(C₂H₅)_{1.5}Cl_{1.5}) was diluted with cyclohexane to prepare an organoaluminum compound catalyst having an aluminum concentration of 107 mmol/L-cyclohexane.

Next, a stirred polymerization vessel (inner diameter: 500 mm; reaction volume: 100 L) was used to continuously perform a copolymerization reaction of ethylene and tetracyclo[4.4.0.1^{2,5}.1^{7,10}]-3-dodecene. Ethylene was supplied into the polymerization vessel together with hydrogen gas. In performing this copolymerization reaction, the vanadium catalyst prepared by the method described above was supplied into the polymerization vessel in an amount such that the concentration of the vanadium catalyst relative to cyclohexane used as a polymerization solvent in the polymerization vessel was 0.6 mmol/L. In addition, the organoaluminum compound (ethylaluminum sesquichloride) was supplied into the polymerization vessel in an amount such that Al/V = 18.0. The copolymerization reaction was performed continuously with the polymerization temperature set as 8°C and the polymerization pressure set as 1.8 kg/cm²G.

Water and sodium hydroxide aqueous solution of 25 mass% in concentration as a pH modifier were added to a solution of a copolymer of ethylene and tetracyclo[4.4.0.1^{2,5}.1^{7,10}]-3-dodecene that was withdrawn from the polymerization vessel so as to stop the polymerization reaction. Also, catalyst residue present in the copolymer was removed (deashed) from this copolymer solution. With respect to the cyclohexane solution (polymer concentration: 7.7 mass%) of the copolymer of ethylene and tetracyclo[4.4.0.1^{2,5}.1^{7,10}]-3-dodecene that had undergone the deashing treatment described above, Irganox 1010 was added as a stabilizer in an additive amount of 0.4 parts by mass relative to 100 parts by mass of the copolymer. Next, before starting a flash drying step, 1 hour of mixing was performed using a stirred tank having an effective volume of 1.0 m³.

The cyclohexane solution of the copolymer in which the concentration of the copolymer had been adjusted to 5 mass% was supplied at a rate of 150 kg/hr into a double-tube heater (outer tube diameter: 2B; inner tube diameter: 3/4B; length: 21 m) in which 20 kg/cm²G of steam was used as a heat source and was heated to 180°C.

A double-tube flash dryer (outer tube diameter: 2B; inner tube diameter: 3/4B; length: 27 m) and a flash hopper (volume: 200 L) in which 25 kg/cm²G of steam was used as a heat source were used to remove cyclohexane serving as a polymerization solvent and the majority of unreacted monomer from the cyclohexane solution of the copolymer that had undergone the heating step described above and thereby obtain a random copolymer (cycloolefin resin) of ethylene and tetracyclo[4.4.0.1^{2,5}.1^{7,10}]-3-dodecene in a molten state that had undergone flash drying.

EXCEPARL PE-MS (produced by Kao Corporation), which is a fatty acid ester, was heated at 100°C for 4 hours such that it was in a molten state, was loaded into a direct vented twin-screw kneading extruder in this molten state in an amount of 2.1 parts by mass relative to 100 parts by mass of the cycloolefin copolymer, and was kneaded with cycloolefin resin loaded from a resin loading section of the extruder. Pelletization was performed by an underwater pelletizer attached to an outlet of the extruder. The resultant pellets were dried by hot air at a temperature of 100°C for 4 hours to obtain a cycloolefin resin composition G.

The obtained cycloolefin resin composition G had a Tg of 129°C. Moreover, the oxygen weight proportion determined from the monomer composition ratio was 0 wt%.

### -Synthesis Example 8 [Cycloolefin resin composition H]-

A mixed monomer was produced by sealing and stirring 76 parts of styrene and 4 parts of isoprene in a pressure-resistant vessel made of stainless steel that had been purged with nitrogen. Next, 320 parts of dehydrated cyclohexane, 4 parts of the mixed monomer, and 0.1 parts of dibutyl ether were charged to an autoclave made of stainless steel that had been purged with nitrogen and that included an electromagnetic stirring device, and these materials were stirred at 50°C while adding 0.18 parts of a hexane solution of n-butyllithium (concentration 15%) to initiate polymerization. Once 0.5 hours had passed from the start of the reaction (point at which the polymerization conversion rate was 96%), 76 parts of the mixed monomer was continuously added to the polymerization reaction solution over 1 hour to continue the polymerization reaction. Once a further 0.5 hours had passed from the end point of addition (point at which the polymerization conversion rate was 95%), 0.1 parts of isopropyl alcohol was added, and the polymerization reaction was ended to obtain a styrene-isoprene copolymer.

Next, 8 parts of a stabilized nickel hydrogenation catalyst (silica-alumina support bearing 60% nickel) was added to 400 parts of the polymerization reaction solution, and these materials were charged to an autoclave made of stainless steel. The inside of the autoclave was purged with hydrogen gas, and then hydrogen gas was supplied such as to maintain the internal pressure of the autoclave at 4.5 MPa and perform a hydrogenation reaction at 160°C for 6 hours. Next, a pressure filter with Radiolite #800 as a filter bed was used to perform pressure filtration at a pressure of 0.25 MPa and obtain a colorless transparent solution from which the catalyst had been removed. This hydrogenation reaction solution was poured into a mixed solution of 250 parts of acetone and 250 parts of isopropanol under stirring, a hydrogenated product was caused to sediment, and this hydrogenated product was filtered off and collected. The hydrogenated product that had been collected was further washed with 200 parts of acetone and was then dried for 24 hours in a 100°C vacuum dryer that had been depressurized to 1 mmHg or less to obtain a cycloolefin resin composition H. The obtained cycloolefin resin composition H had a Tg of 127°C.

### (Example 1)

The methacrylic resin composition A obtained in Synthesis Example 1 was used to produce a light guide by injection compression molding in an injection molding machine (SE180EV-A produced by Sumitomo Heavy Industries, Ltd.). The resin temperature was set as 270°C, the mold temperature was set as 70°C, and the injection rate was set as 100 mm/s such that the resin filling time was 0.168 seconds. Conditions were set such that compression was performed with a force of 1,000 kN at 0.175 seconds after injection of the resin with a compression distance of 1.0 mm. A light guide of 110 mm × 75 mm × 0.6 mm (thickness) was produced with the holding pressure set as 20 MPa in a first stage and 15 MPa in a second stage so to provide the light guide with a uniform thickness, with the holding time set as 2.0 seconds in the first stage and 1.0 seconds in the second stage, and with the cooling time set as 20 seconds. According to the evaluation results, it was possible to obtain a light guide having little retardation and good external appearance. When the obtained light guide was used to observe an image in the arrangement illustrated in FIG. 1, a clear displayed image was confirmed. Note that the polarization maintenance was 99%. The evaluation results are shown in Table 1.

### (Example 2)

A light guide was produced under the same conditions as in Example 1 with the exception that using the methacrylic resin composition A obtained in Synthesis Example 1, the injection rate was set as 200 mm/s such that the resin filling time was 0.087 seconds, and conditions were set such that compression was performed with a force of 1,000 kN at 0.095 seconds after injection of the resin with a compression distance of 1.0 mm. When an image was observed in the arrangement illustrated in FIG. 1, a clear displayed image was confirmed. Note that the polarization maintenance was 99%. The evaluation results are shown in Table 1.

### (Example 3)

A light guide was produced under the same conditions as in Example 1 with the exception that using the methacrylic resin composition A obtained in Synthesis Example 1, the mold temperature was set as 95°C. When an image was observed in the arrangement illustrated in FIG. 1, a clear displayed image was confirmed. Note that the polarization maintenance was 99%. The evaluation results are shown in Table 1.

### (Example 4)

A light guide was produced under the same conditions as in Example 1 with the exception that the light guide was produced using the methacrylic resin composition B obtained in Synthesis Example 2. The evaluation results are shown in Table 1.

### (Example 5)

A light guide was produced under the same conditions as in Example 1 with the exception that the light guide was produced using the methacrylic resin composition C obtained in Synthesis Example 3. The evaluation results are shown in Table 1.

### (Example 6)

A light guide was produced under the same conditions as in Example 1 with the exception that the light guide was produced using the methacrylic resin composition D obtained in Synthesis Example 4. The evaluation results are shown in Table 1.

### (Example 7)

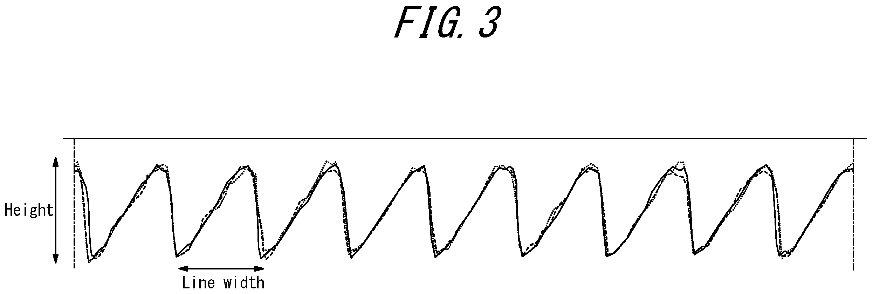

The methacrylic resin composition A obtained in Synthesis Example 1 was used to produce a light guide using a mold having micro-protuberances in part of the mold. The resin temperature was set as 270°C, the mold temperature was set as 90°C, and the injection rate was set as 200 mm/s such that the resin filling time was 0.092 seconds. Conditions were set such that compression was performed with a force of 1,000 kN at 0.1 seconds after injection of the resin with a compression distance of 1.0 mm. A light guide of 110 mm × 75 mm × 0.6 mm (thickness) having micro-protuberances in part thereof was produced with the holding pressure set as 20 MPa in a first stage and 15 MPa in a second stage so to provide the light guide with a uniform thickness, with the holding time set as 2.0 seconds in the first stage and 1.0 seconds in the second stage, and with the cooling time set as 20 seconds. A micro-protuberance section of the obtained light guide was subjected to aluminum vapor deposition, and geometric measurement of the micro-protuberances was performed using an atomic force microscope. As a result, the micro-protuberance section was found to have a shape such as illustrated in FIG. 3 with a line width of 0.85 µm and a height of 0.21 µm. When evaluation of displayed image clarity was performed by observing an image through diffraction of light by the micro-protuberances instead of the second reflective volume hologram illustrated in FIG. 1, a clear displayed image was confirmed. Also note that when polarization maintenance was measured through diffraction of light by the micro-protuberances instead of the second reflective volume hologram illustrated in FIG. 4, the polarization maintenance was 99%. The evaluation results are shown in Table 1.

### (Example 8)

A light guide was produced under the same conditions as in Example 1 with the exception that the cycloolefin resin composition G was used. The evaluation results are shown in Table 2.

### (Example 9)

A light guide was produced under the same conditions as in Example 1 with the exception that the cycloolefin resin composition H was used. The evaluation results are shown in Table 2.

### (Comparative Example 1)

A light guide was produced by the same method as in Example 1 with the exception that the methacrylic resin composition E obtained in Synthesis Example 5 was used. However, cracks formed during demolding, and the obtained product could not be used as a light guide. A section where cracks had not formed was used to perform evaluations. The evaluation results are shown in Table 1.

### (Comparative Example 2)

A light guide was produced by the same method as in Example 1 with the exception that the methacrylic resin composition F obtained in Synthesis Example 6 was used. However, it was not possible to completely transfer the mold shape due to the occurrence of a short shot. Upon evaluation of the obtained light guide, the degree of orientation was high, and in-plane retardation had also increased. Moreover, the light guide had high non-uniformity of thickness and a poor PV value. The evaluation results are shown in Table 1.

### (Comparative Example 3)

A light guide was produced by the same method as in Example 1 with the exception that using the methacrylic resin composition A obtained in Synthesis Example 1, the compression distance was set as 2.0 mm. The evaluation results are shown in Table 1. The light guide had a high PV value, and distortion of a clear displayed image was confirmed in image observation.

### (Comparative Example 4)

A light guide was produced by the same method as in Example 1 with the exception that using the methacrylic resin composition A obtained in Synthesis Example 1, the compression distance was set as 0.3 mm. The evaluation results are shown in Table 1. The light guide had a high PV value, and distortion of a clear displayed image was confirmed in image observation.

### (Comparative Example 5)

A light guide was produced by the same method as in Example 1 with the exception that using the methacrylic resin composition A obtained in Synthesis Example 1, the resin filling time was set as 0.168 seconds, and conditions were set such that the resin was compressed with a force of 1,000 kN at 0.3 seconds after injection. The evaluation results are shown in Table 1. The light guide had a high PV value, and distortion of a clear displayed image was confirmed in image observation.

### (Comparative Example 6)

A light guide was produced by the same method as in Example 1 with the exception that using the methacrylic resin composition A obtained in Synthesis Example 1, the resin filling time was set as 0.168 seconds, and conditions were set such that the resin was compressed with a force of 1,000 kN at 0.1 seconds after injection. The evaluation results are shown in Table 1. The light guide had a high PV value, and distortion of a clear displayed image was confirmed in image observation.

### (Comparative Example 7)

The methacrylic resin composition A obtained in Synthesis Example 1 was used to produce a 110 mm × 75 mm × 0.6 mm (thickness) light guide by injection molding with the resin temperature set as 270°C, the mold temperature set as 110°C, the injection rate set as 100 mm/s, the first stage of holding set as 10 MPa with a holding time of 5 seconds, and the cooling time set as 30 seconds. Cracks formed during demolding, and the light guide had significant warping. A section where cracks had not formed was used to perform evaluations. The evaluation results are shown in Table 1. Distortion of a clear displayed image was confirmed in image observation.

### (Comparative Example 8)

A light guide was produced by the same method as in Comparative Example 7 with the exception that using the methacrylic resin composition A obtained in Synthesis Example 1, the injection rate was set as 200 mm/s, and the mold temperature was set as 50°C. The evaluation results are shown in Table 1.

### (Comparative Example 9)

A light guide was produced by the same method as in Example 1 using DELPET 80NH (produced by Asahi Kasei Corporation). The evaluation results are shown in Table 1.

### (Comparative Example 10)

A light guide was produced under the same conditions as in Example 2 with the exception that using the methacrylic resin composition B obtained in Synthesis Example 2, the resin temperature was changed to 250°C, the mold temperature was changed to 50°C, and the compression distance was changed to 0.5 mm. The evaluation results are shown in Table 1.

**[Table 1]**

| Table 1 | Type of resin composition | Glass-transition temperature (Tg) [°C] | Weight-average molecular weight [×10⁴] | Absolute value of photoelastic coefficient [×10^{- 12} Pa⁻¹] | Degree of orientation [-] | Non-uniformity of thickness of light guide [mm] | PV value [µm] | In-plane retardation [nm] | Total luminous transmittance [%] | Clarity of displayed image [-] | Presence of cracks [-] |
|---|---|---|---|---|---|---|---|---|---|---|---|
| Example 1 | A | 133 | 13 | 0.2 | 0.12 | 0.01 | 36 | 0.7 | 93 | A | No |
| Example 2 | A | 133 | 13 | 0.2 | 0.22 | 0.01 | 32 | 0.7 | 93 | A | No |
| Example 3 | A | 133 | 13 | 0.2 | 0.10 | 0.01 | 47 | 0.6 | 93 | A | No |
| Example 4 | B | 118 | 17 | 5.2 | 0.19 | 0.01 | 35 | 4 | 93 | B | No |
| Example 5 | C | 129 | 13 | 3.6 | 0.23 | 0.03 | 70 | 2 | 92 | B | No |
| Example 6 | D | 122 | 13 | 3.3 | 0.24 | 0.02 | 53 | 2 | 92 | B | No |
| Example 7 | A | 133 | 13 | 0.2 | 0.14 | 0.01 | 38 | 0.8 | 93 | A | No |
| Comparative Example 1 | E | 134 | 9 | 0.2 | 0.07 | - | - | - | - | - | Yes |
| Comparative Example 2 | F | 135 | 18 | 0.4 | 0.29 | 0.15 | 2296 | 1.3 | 93 | C | No |
| Comparative Example 3 | A | 133 | 13 | 0.2 | 0.11 | 0.09 | 210 | 0.7 | 93 | C | No |
| Comparative Example 4 | A | 133 | 13 | 0.2 | 0.12 | 0.08 | 186 | 0.7 | 93 | C | No |
| Comparative Example 5 | A | 133 | 13 | 0.2 | 0.10 | 0.10 | 226 | 0.7 | 93 | C | No |
| Comparative Example 6 | A | 133 | 13 | 0.2 | 0.16 | 0.09 | 196 | 0.7 | 93 | C | No |
| Comparative Example 7 | A | 133 | 13 | 0.2 | 0.08 | - | - | - | - | - | Yes |
| Comparative Example 8 | A | 133 | 13 | 0.2 | 0.11 | 0.20 | 1564 | 7.2 | 93 | C | No |
| Comparative Example 9 | DELPET 80NH | 110 | 8 | 2.7 | 0.08 | 0.02 | 39 | 34 | 93 | C | No |
| Comparative Example 10 | B | 118 | 17 | 5.2 | 0.28 | 0.06 | 93 | 8 | 93 | C | No |

**[Table 2]**

| Table 2 | Type of resin composition | Glass-transition temperature (Tg) [°C] | Absolute value of photoelastic coefficient [×10⁻¹² Pa⁻¹] | Non-uniformity of thickness of light guide [mm] | PV value [µm] | In-plane retardation [nm] | Total luminous transmittance [%] | Clarity of displayed image [-] | Presence of cracks [-] |
|---|---|---|---|---|---|---|---|---|---|
| Example 8 | G | 129 | 7.5 | 0.02 | 42 | 8 | 91 | A | No |
| Example 9 | H | 127 | 8.7 | 0.02 | 36 | 9 | 92 | A | No |

It can be seen from Table 1 that the light guides of the examples have excellent external appearance since they have low PV values and do not suffer from cracking and they also have excellent image quality since the clarity of a displayed image is good.

Moreover, it can be seen from Table 2 that a resin light guide for a display having good external appearance and image quality can be produced by the production method using a thermoplastic resin composition according to the present embodiment.

### INDUSTRIAL APPLICABILITY

According to the present disclosure, it is possible to provide a resin light guide for a display having good external appearance and image quality, and this light guide can suitably be used as a light guide of a display device such as a head-mounted display or a wearable display.

## Claims

1. A resin light guide for a display comprising a methacrylic resin composition, wherein
an absolute value of a degree of orientation of methacrylic acid ester monomer units in the methacrylic resin composition in the resin light guide for a display is 0.10 to 0.25, and
a PV value of an effective area surface that guides image light is 100 µm or less.

2. The resin light guide for a display according to claim 1, wherein an absolute value of a photoelastic coefficient of the methacrylic resin composition contained in the resin light guide for a display is 10 × 10⁻¹² Pa⁻¹ or less.

3. The resin light guide for a display according to claim 1 or 2, wherein the methacrylic resin composition has a weight-average molecular weight of 110,000 to 170,000.

4. The resin light guide for a display according to claim 1 or 2, wherein the methacrylic resin composition has a glass-transition temperature (Tg) of 115°C to 150°C.

5. The resin light guide for a display according to claim 1 or 2, wherein an absolute value of in-plane retardation is 10 nm or less.

6. The resin light guide for a display according to claim 1 or 2, wherein the methacrylic resin composition contains a methacrylic resin including a structural unit having a cyclic structure.

7. The resin light guide for a display according to claim 6, wherein the structural unit having a cyclic structure includes at least one structural unit selected from the group consisting of a structural unit derived from an N-substituted maleimide monomer, a glutarimide-based structural unit, an aromatic vinyl structural unit, an alicyclic vinyl structural unit, and a lactone ring structural unit.

8. The resin light guide for a display according to claim 6, wherein the structural unit having a cyclic structure includes a structural unit derived from an N-substituted maleimide monomer.

9. The resin light guide for a display according to claim 1 or 2, having a thickness of 0.8 mm or less.

10. The resin light guide for a display according to claim 1 or 2, comprising a diffractive optical element at either or both of an entry section and an exit section of light.

11. The resin light guide for a display according to claim 1 or 2, wherein
the resin light guide for a display has a micro-protuberance in a section of a surface or at a plurality of sites, and
the micro-protuberance has a line width of 0.10 µm to 2.00 µm.

12. The resin light guide for a display according to claim 11, wherein a ratio (height)/(line width) of the line width and height of the micro-protuberance is 0.10 to 1.50.

13. An image display device comprising the resin light guide for a display according to claim 1 or 2.

14. A method of producing a resin light guide for a display through injection compression molding of a thermoplastic resin composition, the method comprising a resin filling step and a compression step, wherein
a temperature from a nozzle tip to a middle of an injection molding machine cylinder is set as a temperature that is 120°C to 180°C higher than a glass-transition temperature (Tg) of the thermoplastic resin composition and a mold temperature is set within a range of (Tg - 80)°C to (Tg - 35)°C relative to the glass-transition temperature (Tg) of the thermoplastic resin composition, and
each condition among an injection rate and a filling time in the resin filling step, a compression distance, a compression time, and a compression pressure in the compression step, a compression delay time set between the resin filling step and the compression step, and a cooling time is adjusted such as to satisfy (1) and (2), indicated below:
(1) an absolute value of in-plane retardation of the resin light guide for a display is 10 nm or less;
(2) a PV value of an effective area surface that guides image light in the resin light guide for a display is 100 µm or less.
